(19) Europäisches Patentamt
European Patent Office
Office européen des brevets

(11) **EP 2 504 295 B1**

(12) **EUROPEAN PATENT SPECIFICATION**

(45) Date of publication and mention
of the grant of the patent:
**30.03.2016 Bulletin 2016/13**

(51) Int Cl.:
***B28B 1/52*** (2006.01)

(21) Application number: **10785558.7**

(86) International application number:
**PCT/US2010/057437**

(22) Date of filing: **19.11.2010**

(87) International publication number:
**WO 2011/066191 (03.06.2011 Gazette 2011/22)**

(54) **EXTRUDED FIBER REINFORCED CEMENTITIOUS PRODUCTS HAVING WOOD-LIKE PROPERTIES AND ULTRAHIGH STRENGTH AND METHODS FOR MAKING THE SAME**

EXTRUDIERTE FASERVERSTÄRKTE ZEMENTÖSE PRODUKTE MIT HOLZARTIGEN EIGENSCHAFTEN UND ULTRAHOHER FESTIGKEIT SOWIE HERSTELLUNGSVERFAHREN DAFÜR

PRODUITS CIMENTÉS RENFORCÉS PAR DES FIBRES EXTRUDÉS AYANT DES PROPRIÉTÉS ANALOGUES À CELLES DU BOIS ET UNE RÉSISTANCE ULTRA-ÉLEVÉE ET PROCÉDÉS POUR LEUR FABRICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.11.2009 US 624924**

(43) Date of publication of application:
**03.10.2012 Bulletin 2012/40**

(73) Proprietor: **E. Khashoggi Industries, LLC**
**Santa Barbara, California 93117 (US)**

(72) Inventors:
• **ANDERSEN, Per Just**
**Santa Barbara**
**California 93103 (US)**

• **HODSON, Simon K.**
**Santa Barbara**
**California 93117 (US)**

(74) Representative: **Smaggasgale, Gillian Helen**
**WP Thompson**
**138 Fetter Lane**
**London EC4A 1BT (GB)**

(56) References cited:
**WO-A2-2007/053852     GB-A- 2 354 235**
**US-A1- 2009 065 978**

• **DATABASE WPI Week 200572 Thomson Scientific, London, GB; AN 2005-692898 XP002619874, & JP 2005 255425 A (KURABO IND LTD) 22 September 2005 (2005-09-22)**

**Description**

**BACKGROUND OF THE DISCLOSURE**

THE FIELD OF THE DISCLOSURE

The present disclosure relates generally to fiber-reinforced extrudable cementitious compositions resulting in cementitious building products having high flexural strength and low bulk density. The extrudable cementitious compositions are capable of use in manufacturing cementitious building products having wood-like properties.

THE RELATED TECHNOLOGY

Lumber and other building products obtained from trees have been a staple for building structures throughout history. Wood is a source for many different building materials because of its ability to be cut and shaped into various shapes and sizes, its overall performance as a building material, and its ability to be formed into many different building structures. Not only can trees be cut into two-by-fours, one-by-tens, plywood, trim board, and the like, but different pieces of lumber can be easily attached together via glue, nails, screws, bolts, and other fastening means. Wood lumber can be easily shaped and combined with other products to produce a desired structure.

While trees are a renewable resource, it can take many years for a tree to grow to a usable size. As such, trees may be disappearing faster than they can be grown, at least locally in various parts of the world. Additionally, deserts or other areas without an abundance of trees either have to import lumber or forgo constructing structures that require wood. Due to concerns regarding deforestation and other environmental issues relating to the cutting of trees, there has been an attempt to create "lumber substitutes" from other materials such as plastics and concretes. While plastics have some favorable properties such as moldability and high tensile strength, they are weak in compressive strength, are generally derived from non-renewable resources, and are generally considered to be less environmentally friendly than natural products.

On the other hand, concrete is a building material that is essentially un-depletable because its constituents are as common as clay, sand, rocks, and water. Concrete usually includes hydraulic cement, water, and at least one aggregate, wherein the water reacts with the cement to form cement paste, which binds the aggregates together. When the hydraulic cement and water cure (*i.e.*, hydrate) so as to bind the cement and water with the aggregates and other solid constituents, the resulting concrete can have an extremely high compressive strength and flexural modulus, but is a brittle material with relatively low tensile strength compared to its compressive strength, with little toughness or deflection properties. Nevertheless, by adding strengtheners such as rebar or building massive structures, concrete is useful for constructing driveways, building foundations, and generally large, massive structures.

Previous attempts to create lumber substitutes with concrete have not provided products with adequate characteristics. In part, this is because of the traditional approaches to fabricating concretes that require mixtures to be cured in molds, and have not provided products with the proper toughness or flexural strength to be substituted for lumber. One attempt to manufacture general construction elements (e.g., roofing tiles, façade elements, pipes, and the like) from concrete involves the "Hatschek process", which is a modification of the process used to manufacture paper.

In the Hatschek process, building products are made from a highly aqueous slurry containing up to 99% water, hydraulic cement, aggregates and fibers. The aqueous slurry has an extremely high water-to-cement ("w/c") ratio and is dewatered to yield a composition that is capable of curing to form solid building products. The aqueous slurry is applied in successive layers to a porous drum and dewatered between subsequent layers. The fibers are added to keep the solid cement particles from draining off with the water and impart a level of toughness. When still in a moist, unhardened condition, the dewatered material is removed from the drum, cut into sheets or optionally pressed shaped, and allowed to cure. The resulting products are layered. While adequately strong when kept dry, they tend to separate or delaminate when exposed to excessive moisture over time. Because the products are layered, the components, particularly the fibers, are not homogeneously dispersed.

Furthermore, cementitious building products do not achieve their full potential with regard to strength until months or even years after construction is completed. Particularly, as well-known in the art, concrete continues to harden, and thus strengthen, as it cures until the moisture within the composition is completely consumed. Typically, a 28-day strength is used as a construction benchmark. Previous attempts to cure faster by raising the temperature, such as with steam curing and autoclaving, in which temperatures reach above 65°C, have led to the formation of secondary ettringites, both of which can lead to unfavorable cracking and breaking of the end product.

While the current inventors previously invented methods for manufacturing flexible paper-like sheets using cement and fibers, such sheets were flexible like paper and could be bent, folded or rolled into a variety of different food or beverage containers much like paper. Such sheets would not be suitable for use as a building material. For one thing, such sheets were made by quickly drying a moldable composition on a heated roller within seconds or minutes of formation, which resulted in the hydraulic cement particles becoming mere fillers, with the rheology-modifying agent providing most, if not all, of the binding force. Because the cement particles were acting merely as fillers, they were eventually replaced with cheaper calcium carbonate filler particles.

It would therefore be advantageous to provide a cementitious composition and method for preparing wood-like cementitious composite building products that can be used as a substitute for lumber products and that could be easily and quickly manufactured. It would be further advantageous if the building products could have increased flexural strength as compared to conventional products. Moreover, it would be beneficial to provide building products that could be used as a substitute for wood, including a wide variety of wood building products, such as structural and decorative products currently made from wood.

## SUMMARY OF THE DISCLOSURE

The present disclosure relates to cementitious building materials that can function as a substitute for lumber. According to the first aspect of the present invention there is provided a method of manufacturing a cementitious composite product having properties suitable for use as a substitute for wood lumber, comprising mixing together water, fibers and a rheology-modifying agent to form a fibrous mixture in which the fibers are substantially homogeneously dispersed, the rheology-modifying agent is selected from the group consisting of is polysaccharides, proteins, celluloses, starches, methylhydroxyethylcellulose, hydroxymethylethylcellulose, carboxymethylcellulose, methylcellulose, ethylcellulose, hydroxyethylcellulose, hydroxypropylcellulose, amylpectin, amulose, seagel, starch acetates, starch hydroxyethers, ionic starches, long chain alkylstarches, dextrins, amine starches, phosphate starches, dialdehyde starches, clay, and combinations thereof adding hydraulic cement to the fibrous mixture to yield an extrudable cementitious composition having a plastic consistency and which includes the rheology-modifying agent at a concentration from 0.1% to 10% by wet volume, and fibers at a concentration greater than 5% by wet volume extruding the extrudable cementitious composition into a green intermediate extrudate having a predefined cross-sectional area, the green extrudate being form-stable upon extrusion and capable of retaining substantially the cross-sectional area so as to permit handling without breakage heating the green extrudate to a temperature of from greater than 65°C to less than 99°C to allow curing of the hydraulic cement.

The present invention also relates to a cementitious composite product prepared by the method of the above first aspect.

The present disclosure involves the use of extrudable cementitious compositions that can be extruded or otherwise shaped into wood-like building products that can be used as a substitute for many known lumber products. The fibrous cementitious building products can have properties similar to wood building products. In some embodiments, the fibrous cementitious building products can be sawed, cut, drilled, hammered, and affixed together as is commonly done with wood building products and described in more detail below.

Ordinary concrete is generally much denser and harder than wood and therefore much harder to saw, nail or screw into. Though not strictly a measurement of hardness, the flexural modulus, which refers to the Modulus of Elasticity or Young's Modulus, of a material has been found to correlate with hardness as it relates to the ability to saw, nail and/or screw cementitious building products. Ordinary concrete typically has a flexural modulus with an order of magnitude of about 4,000,000 psi (27.5 gigapascals) to about 6,000,000 psi (41.4 gigapascals), while the flexural modulus of wood ranges from about 500,000 psi up to about 5,000,000 psi (about 3.5 to 35 gigapascals). Furthermore, concrete is typically about 5 to 100 times harder than wood. Softer woods, like pine, which are more easily sawed, nailed and screwed than harder woods, are up to 100 times softer than concrete, as approximated by flexural modulus.

In general, the ability of cementitious building products to be sawed using ordinary wood saws, nailed using a hammer, or screwed using a common driver is a function of hardness, which is approximately proportional to the density (i.e., the lower to density, the lower the hardness as a general rule). In cases where it will be desirable for the cementitious building products to be sawed, nailed and/or screwed using tools commonly found in the building industry when using wood products, the cementitious building products will generally have a hardness that approximates that of wood (i.e., so as to be softer than conventional concrete). The inclusion of fibers and rheology modifying agents assist in creating products that are softer than conventional concrete. In addition, the inclusion of a substantial quantity of well-dispersed pores helps reduce density which, in turn, helps reduce hardness.

Moreover, the cementitious building products of the present disclosure have a higher flexural strength than compressive strength. The higher flexural strength will allow for a heavier load prior to breaking at the maximum deflection. Deflection for a typical beam is determined using the following equation:

$$\text{Deflection at Center of Beam} = \text{load} \times \text{length}^3/48/\text{Elasticity Modulus}/\text{Moment of Inertia}$$

Accordingly, the higher the modulus of elasticity, the lower the deflection.

In one embodiment, the present disclosure includes a cementitious composite product for use as a lumber substitute. Such a product can include a cured cementitious composite comprised of hydraulic cement, a rheology-modifying agent, and fibers. The cured cementitious composite can be characterized by one or more of the following: being capable of being sawed by hand with a wood saw; a flexural modulus in a range of about 200,000 psi (1.4 gigapascals) to about 5,000,000 psi (35 gigapascals); a flexural strength of at least about 1500 psi (10.3 MPa); a preferred density less than about 1.3 g/cm$^3$, more preferably less than about 1.15 g/cm$^3$, even more preferably less than about 1.1 g/cm$^3$, and most preferably less than about 1.05 g/cm$^3$, and fibers substantially homogeneously distributed through the cured cementitious composition, preferably at a concentration greater than about 10% by dry volume. The building products manufactured according to the present disclosure are much stiffer than cement-containing paper-like products. Because the fibers are substantially homogeneously dispersed (i.e., are not layered as in the Hatschek process), the building products do not separate or delaminate when exposed to moisture.

The cured cementitious composition is generally prepared by mixing an extrudable cementitious composition including a rheology-modifying agent at a concentration from about 0.1% to about 10% by wet volume, and fibers at a concentration greater than about 5% by wet volume, and more preferably, greater than about 7% by wet volume, and even more preferably, greater than about 8% by wet volume. The extruded compositions are characterized as having a clay-like consistency with high yield stress, Binghamian plastic properties and immediate form stability. After being mixed, the extrudable cementitious composition can be extruded into a green extrudate having a predefined cross-sectional area. The green extrudate is advantageously form-stable upon extrusion so as to be capable of retaining its cross-sectional area and shape so as to not slump after extrusion and so as to permit handling without breakage. In one embodiment, after being extruded, the hydraulic cement within the green extrudate can be cured by heating at a temperature of from greater than 65°C to less than 99°C so as to form the cured cementitious composite. In another embodiment, the hydraulic cement within the green extrudate is cured using an autoclave having a temperature of about 150°C at 15 bars for about 24 hours.

According to one embodiment, the amount of water that is initially used to form an extrudable composition is reduced by evaporation prior to, during or after hydration of the cement binder. This may be accomplished by drying in an oven, typically at a temperature below the boiling point of water to yield controlled drying while not interfering with cement hydration. There are at least two benefits that result from such drying: (1) the effective water to cement ratio can be reduced, which increases the strength of the cement paste; and (2) the removed water leaves behind a controlled uniform density.

The nominal or apparent water/cement ratio of the extrudable composition can initially be in a range of about 0.8 to about 1.2. However, the effective water/cement ratio based on water that is actually available for cement hydration is typically much lower. For example, after removing a portion of the water by evaporation, the resulting water/cement ratio is typically in a range of about 0.1 to about 0.5, *e.g.,* preferably about 0.2 to about 0.4, more preferably about 0.25 to about 0.35, and most preferably about 0.3. It has been found that not all of the added water can be removed by evaporation by heating in an oven as described above, which indicates that some of the water is able to react with and hydrate the cement even while heating, making it chemically bound water rather than free water that can be evaporated off. This process differs from processes that utilize steam curing, in which the temperature of the produce is increased while keeping the product moist.

The fibers used in the cementitious composites according to the disclosure can be one or more of hemp fibers, cotton fibers, plant leaf or stem fibers, hardwood fibers, softwood fibers, glass fibers, graphite fibers, silica fibers, ceramic fibers, metal fibers, polymer fibers, polypropylene fibers, and carbon fibers. The amount of fibers that are substantially homogeneously distributed through the cured cementitious composition is preferably greater than about 10% by dry volume, more preferably greater than about 15% by dry volume, more preferably greater than about 20% by dry volume. Some fibers, such as wood or plant fibers, have a high affinity for water and are able to absorb substantial quantities of water. That means that some of the water added to a cementitious composition to make it extrudable may be tied up with the fibers, thereby reducing the effective water/cement ratio as water tied up by the fibers is not readily available to hydrate the cement binder.

The hydraulic cement binder used in the cementitious composites according to the disclosure can be one or more of Portland cements, MDF cements, DSP cements, Densit-type cements, Pyrament-type cements, calcium aluminate cements, plasters, silicate cements, gypsum cements, phosphate cements, high alumina cements, micro fine cements, slag cements, magnesium oxychloride cements, and combinations thereof. The cement binder contributes at least about 50% of the overall binding strength of the building product (e.g. in combination with binding strength imparted by the rheology modifying agent). Preferably, hydraulic cement will contribute at least about 70% of the overall binding strength, more preferably at least about 80%, and most preferably at least about 90% of the binding strength. Because the hydraulic cement binder contributes substantially to the overall strength of the building materials, they are much stronger and have much higher flexural stiffness compared to paper-like products that employ hydraulic cement mainly as a filler (*i.e.,* by virtue of heating to 150°C and above to rapidly remove all or substantially all of the water by evaporation).

The rheology modifying agent can be one or more of polysaccharides, proteins, celluloses, starches such as amylpectin, amulose, seagel, starch acetates, starch hydroxyethers, ionic starches, long chain alkyl-starches, dextrins, amine starches, phosphate starches, dialdehyde starches, cellulosic ethers such as methylhydroxyethylcellulose, hydroxymethylethylcellulose, carboxymethylcellulose, methylcellulose, ethylcellulose, hydroxyethylcellulose, hydroxypropylcellulose, and clay. The rheology modifying agent is preferably included in an amount in a range of about 0.25% to about 5% by wet weight of the cementitious composition, more preferably in a range of about 0.5% to about 4% by wet weight, and most preferably in a range of about 1% to about 3% by wet weight. Like the fibers, the rheology modifying agent can bind with water, thereby reducing the effective water/cement ratio compared to the nominal ratio based on actual water added rather than water that is available for hydration. While the rheology modifying agent can act as a binder, it will typically contribute less than about 50% of the overall binding force.

Optionally, a set accelerator at a concentration from about 0.01% to about 15% by dry weight can be included, wherein the set accelerator can be one or more of $KCO_3$, $KOH$, $NaOH$, $CaCl_2$, $CO_2$, magnesium chloride, triethanolamine, aluminates, inorganic salts of $HCl$, inorganic salts of $HNO_3$, inorganic salts of $H_2SO_4$, calcium silicate hydrates (C-S-H), and combinations thereof. Set accelerators may be especially useful in the case where rapid strength is desired for handling and/or where a portion of the water is removed by evaporation during initial hydration.

A set retarder may also optionally be included at a concentration from about 0.5% to about 2.0% by dry weight. Suitably, the set retarder can be one or more retarder commercially available as Delvo®, from Masterbuilders. Set retarders may be especially useful in the case where constant rheology of the building materials is desired during handling and extrusion.

An aggregate material can also be included, which is one or more of sand, dolomite, gravel, rock, basalt, granite, limestone, sandstone, glass beads, aerogels, perlite, vermiculite, exfoliated rock, xerogels, mica, clay, synthetic clay, alumina, silica, fly ash, silica fume, tabular alumina, kaolin, glass microspheres, ceramic spheres, gypsum dihydrate, calcium carbonate, calcium aluminate, rubber, expanded polystyrene, cork, saw dust, and combinations thereof.

In one embodiment, the cured cementitious composite can receive a 10d (76 mm) nail by being hammered therein with a hand hammer. The cured cementitious composite can have a pullout resistance of at least about 25 lbf/in (2.8 N.m) for the 10d (76 mm) nail, preferably at least about 50 lbf/in (5.6 N.m) for the 10d (76 mm) nail. Additionally, the cured cementitious composite can have a pullout resistance of at least about 300 lbf/in (33.9 N.m) for a screw, preferably at least about 500 lbf/in (56.5 N.m) for the screw. Pullout resistance is generally related to the amount of fibers within the cementitious composite (i.e., increases with increasing fiber content, all things being equal). The fibers create greater localized fracture energy and toughness that resists formation or cracks in and around a hole made by a nail or screw. The result is a spring back effect in which the matrix holds the nail by frictional forces or the screw by both frictional and mechanical forces.

In one embodiment, the method of making the cementitious composite can include extruding the extrudable cementitious composition around at least one reinforcing member selected from the group consisting of rebar, wire, mesh, continuous fiber, and fabric so as to at least partially encapsulate the reinforcing member within the green extrudate.

In one embodiment, the method of making the cementitious composite product can include the following: extruding a green extrudate having at least one continuous hole that is form-stable; inserting a rebar and a bonding agent into the continuous hole while the cementitious composite is in a form-stable green state or is at least partially cured; and bonding the rebar to a surface of the continuous hole with the bonding agent. Optionally, the bonding agent is applied to the rebar before inserting the rebar.

In one embodiment, the method of making the cementitious composite product can include configuring the cementitious composite into a building product so as to be a substitute for a lumber building product. As such, the building product can be fabricated into a shape selected from the group consisting of a rod, bar, pipe, cylinder, board, I-beam, utility pole, trim board, two-by-four, one-by-eight, panel, flat sheet, roofing tile, and a board having a hollow interior. The building products are typically manufactured using a process that includes extrusion, but which may also include one or more intermediate or finishing procedures. An intermediate procedure typically occurs while the composition is in a green, uncured state, while a finishing procedure typically occurs after the material has been cured or hardened.

Unlike wood, which cannot be appreciably softened except by damaging or weakening the wood structure, concrete is plastic and moldable prior to curing. Building products made therefrom can be reshaped (i.e., curved or bent) while in a green state to yield shapes that are generally hard or impossible to attain using real wood: The surface or cementitious matrix of the building products can be treated so as to be waterproof using waterproofing agents such as silanes, siloxanes, latexes, epoxy, acrylics, and other waterproofing agents known in the concrete industry, which is a further advantage over wood. Such materials may be mixed into and/or applied to the surface of the cementitious building products.

The building products may be solid or they may be hollow. Providing continuous holes by extruding around a solid mandrel to yield a discontinuity yields building products that are lightweight. One or more of such holes can be filled with rebar reinforcement (e.g., bonded with epoxy or other adhesive), they may provide a conduit for electrical wires, or they can be used to screw into the building product much like a pre-drilled hole. The building products may comprise complex extruded structures. They may have virtually any size or cross sectional shape. They can be formed into large sheets (*e.g.*, by roller-extruding) or blocks (*e.g.*, through large die openings) and then milled into smaller sizes like wood.

In one embodiment, a method of making the cementitious composite product can include processing the form-stable green extrudate and/or cured cementitious composite by at least one process selected from the group consisting of bending, stamping, impact molding, cutting, sawing, sanding, milling, texturizing, planing, polishing, buffing, predrilling holes, painting, and staining.

In one embodiment, a method of making the cementitious composite product can include recycling a portion of a scrap green extrudate or material cut away from the main body of a building product (*e.g.*, by stamping), wherein the recycling includes combining the scrap green extrudate with an extrudable cementitious composition.

In one embodiment, the process for curing the hydraulic cement can include heat curing or autoclaving. It has been found, that by raising the curing temperatures, the hydraulic cement can be cured faster to produce a cementitious composite with a greater percentage of strength in a shorter period of time. It is further believed that the rheology modifying agent acts as a retarder and unless the temperature exceeds 65°C, the retarding effect is not counteracted, slowing the strength development of the cement. Above 65°C, however, the rheology modifying agent is precipitated out of solution and the hydration can proceed faster, which leads to a higher strength development. Preferably, the extrudate is heated, to a temperature of from greater than 65°C to less than 99°C, more preferably greater than 70°C, more preferably greater than 80°C, and even more preferably greater than 90°C to allow the hydraulic cement therein to cure.

In one embodiment, the extrusion can be through a die opening. Alternatively, the extrusion can be by means of roller-extrusion.

These and other embodiments and features of the present disclosure will become more fully apparent from the following description and appended claims, or may be learned by the practice of the disclosure as set forth hereinafter.

## BRIEF DESCRIPTION OF THE DRAWINGS

To further clarify the above and other advantages and features of the present disclosure, a more particular description of the disclosure will be rendered by reference to specif embodiments thereof which are illustrated in the appended drawings. It is appreciated that these drawings depict only typical embodiments of the disclosure and are therefore not to be considered limiting of its scope. The disclosure will be described and explained with additional specificity and detail through the use of the accompanying drawings in which:

Figure 1A is a schematic diagram that illustrates an embodiment of an extruding process for manufacturing a cementitious building product;

Figure 1B is a schematic diagram that illustrates an embodiment of an extruding die head for manufacturing a cementitious building product having a continuous hole extending therethrough;

Figure 1C is a perspective view that illustrates embodiments of the cross-sectional areas of extruded cementitious building products;

Figure 2 is a schematic diagram that illustrates an embodiment of a roller-extrusion process for preparing a cementitious building product;

Figures 3A-D are perspective views that illustrate embodiments of co-extruding a cementitious building product with a structurally reinforcing element;

Figure 4 is a schematic diagram that illustrates an embodiment of a process for structurally reinforcing a cementitious building product;

Figure 5A is a perspective view that illustrates prior art concrete and a nail inserted therein;

Figure 5B is a perspective view that illustrates an embodiment of a cementitious building product and a nail inserted therein;

Figure 6A is a longitudinal cut-away view of Figure 4;

Figure 6B is a mid-level cross-sectional view of Figure 6A;

Figure 7A is a longitudinal cut-away view of Figure 5;

Figure 7B is a mid-level cross sectional view of Figure 7A;

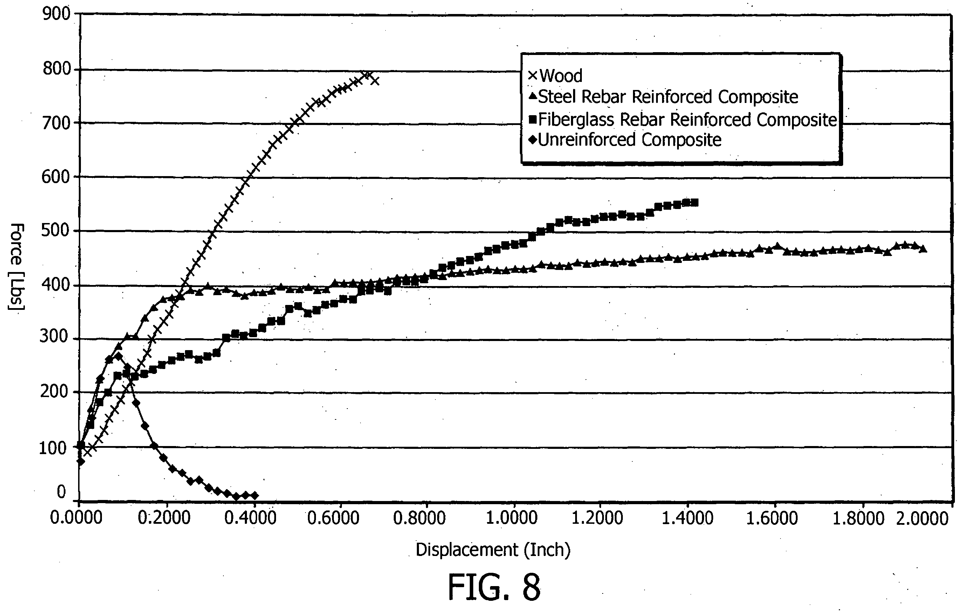

Figure 8 is a graph of flexural strengths of wood, an embodiment of a cementitious building product, and an embodiment of a rebar-reinforced cementitious building product;

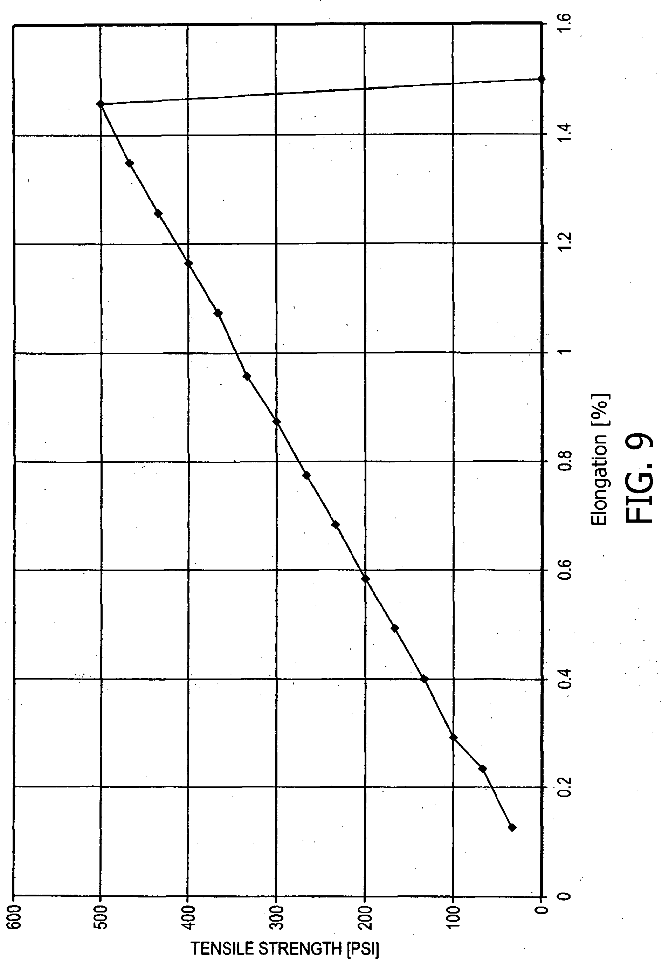

Figure 9 is a graph of a tensile strength of an embodiment of a cementitious building product; and

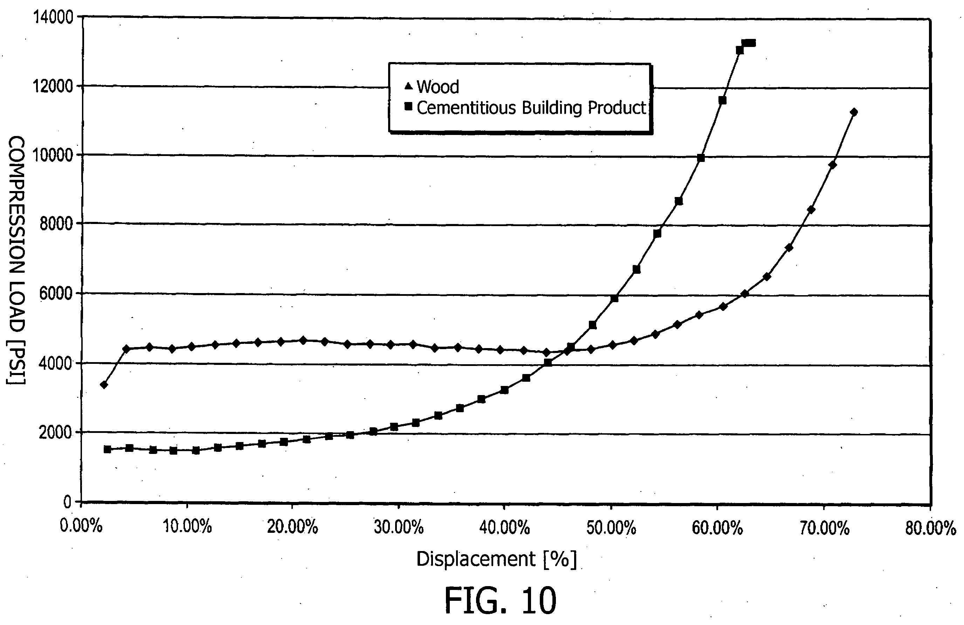

Figure 10 is a graph of the displacement of wood and an embodiment of a cementitious building product by a compressive force.

## DETAILED DESCRIPTION OF THE PREFERRED EMBODIMENTS

Generally, the present disclosure is related to cementitious compositions and methods for preparing such compositions and manufacturing cementitious building products that have properties similar to wood building products. Particularly, the methods include using higher curing temperatures for preparing the cementitious building products, allowing for products having a higher bulk density, and thus, a higher flexural strength, while maintaining the ability to be easily nailed, screwed, drilled, and the like, as compared to conventional products. The terminology employed herein is used for the purpose of describing particular embodiments only and is not intended to be limiting.

GENERAL DEFINITIONS

The term "multi-component" refers to fiber-reinforced cementitious compositions and extruded composites prepared therefrom, which typically include three or more chemically or physically distinct materials or phases. For example, these extrudable compositions and resulting building products can include components such as rheology-modifying agents, hydraulic cements, other hydraulically settable materials, set accelerators, set retarders, fibers, inorganic aggregate materials, organic aggregate materials, dispersants, water, and other liquids. Each of these broad categories of materials imparts one or more unique properties to extrudate mixtures prepared therefrom as well as to the final article. Within these broad categories it is possible to further include different components (such as two or more inorganic aggregates or fibers) which can impart different, yet complementary, properties to the extruded article.

The terms "hydraulically settable composition" and "cementitious composition" are meant to refer to a broad category of compositions and materials that contain both a hydraulically settable binder and water as well as other components, regardless of the extent of hydration or curing that has taken place. As such, the cementitious materials include hydraulic pastes or hydraulically settable compositions in a green state (*i.e.*, unhardened, soft, or moldable), and a hardened or set cementitious building product.

The term "homogeneous" is meant to refer to a composition to be evenly mixed so that at least two random samples of the composition have roughly or substantially the same amount, concentration, and distribution of a component.

The terms "hydraulic cement," "hydraulically settable binder," "hydraulic binder," or "cement" are meant to refer to the component or combination of components within a cementitious or hydraulically settable composition that is an inorganic binder such as, for example, Portland cements, fly ash, and gypsums that harden and cure after being exposed to water. These hydraulic cements develop increased mechanical properties such as hardness, compressive strength, tensile strength, flexural strength, and component surface bonds (*e.g.*, binding of aggregate to cement) by chemically reacting with water.

The terms "hydraulic paste" or "cement paste" are meant to refer to a mixture of hydraulic cement and water in the green state as well as hardened paste that results from hydration of the hydraulic binder. As such, within a hydraulically settable composition, the cement paste binds together the individual solid materials, such as fibers, cement particles, aggregates, and the like.

The terms "fiber" and "fibers" include both natural and synthetic fibers. Fibers typically having an aspect ratio of at least about 10:1 are added to an extrudable cementitious composition to increase the elongation, deflection, toughness, and fracture energy, as well as flexural and tensile strengths of the resulting extruded composite or finished building product. Fibers reduce the likelihood that the green extrudate, extruded articles, and hardened or cured articles produced therefrom will rupture or break when forces are applied thereto during handling, processing, and curing. Also, fibers can provide wood-like properties to cementitious building products, such as nail hold, screw hold, pullout resistance, and the ability to be sawed by machine or a handsaw, and/or be drilled with a wood-drilling bit; that is, fibers provide toughness and flexibility to the matrix that provides spring-back of the matrix against a screw or nail. Fibers can absorb water and reduce the effective water/cement ratio.

The term "fiber-reinforced" is meant to refer to fiber-reinforced cementitious compositions that include fibers so as to provide some structural reinforcement to increase a mechanical property associated with a green extrudate, extruded articles, and hardened or cured composites as well as the building products produced therefrom. Additionally, the key term is "reinforced," which clearly distinguishes the extrudable cementitious compositions, green extrudate, and cured building products of the present disclosure from conventional settable compositions and cementitious articles. The fibers act primarily as a reinforcing component to specifically add tensile strength, flexibility, and toughness to the building products as well as to reinforce any surfaces cut or formed thereon. Because they are substantially homogeneously dispersed, the building products do not separate or delaminate when exposed to moisture as can products made using the Hatschek process.

The term "mechanical property" is meant to include a property, variable, or parameter that is used to identify or characterize the mechanical strength of a substance, composition, or article of manufacture. Accordingly, a mechanical property can include the amount of elongation, deflection, or compression before rupture or breakage, stress and/or strain before rupture, tensile strength, compressive strength, Young's Modulus, stiffness, hardness, deformation, resistance, pullout resistance, and the like.

The terms "extrudate," "extruded shape," or "extruded article," are meant to include any known or future designed shape of articles that are extruded using the extrudable compositions and methods of the present disclosure. For example, the extruded composite can be prepared into rods, bars, pipes, cylinders, boards, I-beams, utility poles such as power poles, telephone poles, antennae poles, cable poles, and the like, two-by-fours, one-by-fours, panels, flat sheets, other traditional wood products, roofing tiles, boards having electrical conduits, and rebar-reinforced articles. Additionally, an extruded building product can initially be extruded as a "rough shape" and then shaped, milled or otherwise refined into an article of manufacture, which is intended to be included by use of the present terms. For example, a slab or large block (*e.g.*, a 16-by-16) can be cut or milled into a plurality of two-by-fours.

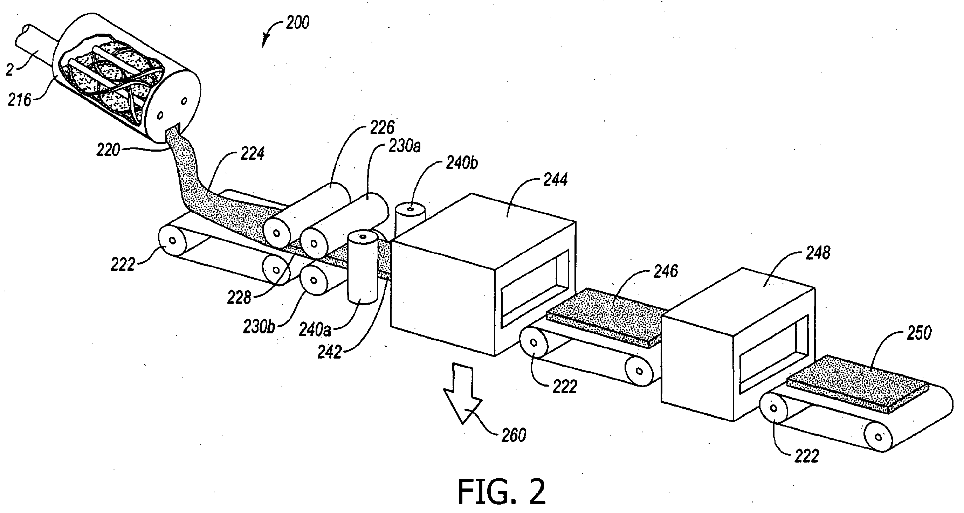

The term "extrusion" can include a process where a material is processed or pressed through an opening or through an area having a certain size so as to shape the material to conform with the opening or area. As such, an extruder pressing a material through a die opening can be one form of extrusion. Alternatively, roller-extrusion, which includes pressing a composition between a set of rollers, can be another form of extrusion. Roller-extrusion is described in more detail below in Figure 2. In any event, extrusion refers to a process that is used to shape a moldable composition without cutting, milling, sawing or the like, and usually includes pressing or passing the material through an opening having a predefined cross-sectional area.

The terms "hydrated" or "cured" are meant to refer to a level of a hydraulic reaction which is sufficient to produce a hardened cementitious building product having obtained a substantial amount of its potential or maximum strength. Nevertheless, cementitious compositions or extruded building products may continue to hydrate or cure long after they have attained significant hardness and a substantial amount of their maximum strength.

The terms "green," "green material," "green extrudate," or "green state" are meant to refer to the state of a cementitious composition which has not yet achieved a substantial amount of its final strength; however, the "green state" is meant to identify that the cementitious composition has enough cohesiveness to retain an extruded shape before being hydrated or cured. As such, a freshly extruded extrudate comprised of hydraulic cement and water should be considered to be "green" before a substantial amount of hardening or curing has taken place. The green state is not necessarily a clear-cut line of demarcation as to the amount of curing or hardening that has taken place, but should be construed as being the state of the composition prior to being substantially cured. Thus, a cementitious composition is in the green state post extrusion and prior to being substantially cured.

The term "form-stable" is meant to refer to the condition of a green extrudate immediately upon extrusion which is characterized by the extrudate having a stable structure that does not deform under its own weight. As such, a green extrudate that is form-stable can retain its shape during handling and further processing.

The term "composite" is meant to refer to a form-stable composition that is made up of distinct components such as fibers, rheology-modifiers, cement, aggregates, set accelerators, set retarders, and the like. As such, a composite is formed as the hardness or form-stability of the green extrudate increases, and can be prepared into a building product.

The term "dry volume" is meant to refer to the composition being characterized without the presence of water or other equivalent solvent or hydrating reactant. For example, when the relative concentrations are expressed in percentages by dry volume, the relative concentrations are calculated as if there were no water. Thus, the dry volume is exclusive of water.

The term "wet volume" is meant to refer to the composition being characterized by the moisture content that arises from the presence of water. For example, the relative concentration for wet volume of a component is measured by a total volume that includes the water and all other compositional components.

The term "nail acceptance" is meant to refer to the ease of hammering a nail into a cementitious building product. The nail acceptance is described by a numerical range that is defined as follows: (1) refers to a building product into which a nail can be easily hammered without bending; (2) refers to a building product of greater hardness such that a nail can be hammered without bending but that requires greater skill and substantial downward pressure to prevent bending; (3) refers to a building product having a high level of hardness such that a nail is typically bent or deformed using normal hammering action (but which can accept a straight nail if a conventional nail gun having high force is used).

As used herein, the term "pullout resistance" is meant to refer to the amount of force or pressure required to extract a fastening rod, such as a nail or screw, from a substrate such as wood, concrete, and the inventive cementitious building product. Also, pullout resistance can be calculated by the force required to extract a 10d (e.g., 10 penny nail) (76 mm) nail imbedded 1-inch (2.54 cm) into the cured cementitious composite. The pullout resistance is proportional to the fiber content, all things being equal.

As used herein, the term "fastening rod" is meant to refer to a nail, screw, bolt, or the like that is configured to form a hole within a substrate while being inserted therein. Such insertions can be performed by hammering, screwing, ballistics, and the like. Additionally, the fastening rod can be used to fasten one member to another member by the fastening rod forming holes as it is being inserted within each member.

The building products of the present disclosure can typically be drilled using ordinary wood drill bits and/or sawed using ordinary wood saws, unlike conventional concrete products which require masonry bits and saw blades.

In view of the foregoing definitions, the following discussion sets forth the inventive features of embodiments of the present disclosure.

COMPOSITIONS USED TO MAKE EXTRUDED BUILDING PRODUCTS

The extrudable cementitious compositions used to make extruded building products in accordance with the present disclosure include water, hydraulic cement, fibers, a rheology modifying agent, and optionally a set accelerator, set retarder, and/or an aggregate. The cementitious building products are formulated so as to have less hardness and compressive strength compared to ordinary concrete, and have greater flexibility, softness, elongation, toughness, flexural strength, and deflection in order to better imitate the properties of real wood. In general, the ratio of flexural strength to compressive strength of the inventive cementitious composites will be much higher than conventional concrete.

Moreover, the extrudable cementitious compositions and extruded building products prepared therefrom can have some components that are substantially the same as in other multi-component compositions discussed elsewhere. Accordingly, supplemental information on the individual components of such multi-component compositions and mixtures as well as some aspects of methods used to manufacture extruded articles and calendared articles therefrom can be obtained in U.S. Pat. Nos. 5,508,072, 5,549,859, 5,580,409, 5,631,097, and 5,626,954, and U.S. Patent Application No. 60/627,563.

It should be understood, however, that the building products of the present disclosure are substantially stronger and have greater flexural stiffness compared to paper-like sheet products manufactured using hydraulic cement but wherein such sheets were completely dried out in a manner of seconds or minutes using a roller heated significantly above the boiling point of water (e.g., 150-300°C). Rapid evaporation of water stops the hydration of hydraulic cement, thereby converting it into a particulate filler rather than a binder. Controlled evaporation of water over a period of several days (at least about 2 days) at a temperature below the boiling point of water (e.g., 100-175°F, or about 40-80°C) removes excess water while still allowing hydration of the hydraulic cement binder. Furthermore, in the instant disclosure, the cement is cured prior to drying, thereby allowing the cement to develop its 28-day strength prior to drying where the hydration is stopped.

In one embodiment, the calendering equipment and processes described in the incorporated references can be used with the compositions described herein. However, the nip distance between calenders may be adjusted to produce boards or other products that are a size to be used as cementitious building products (i.e., at least about 1/8 inch, preferably at least 1/4 inch, more preferably at least ½ inch, and most preferably at least 1 inch) (at least about 2 mm, preferably at least about 5 mm, more preferably at least about 1.25 cm, and most preferably at least about 2.5 cm). For example, the process described in U.S. Pat. No. 5,626,954 can be modified to calender larger materials so as to produce wood-like boards, such as two-by-fours, one-by-tens, and the like. Also, the benefits of the calendering process can be used to prepare wood-like boards of any length, such as lengths that are essentially impossible to obtain from real wood. This can allow for the inventive wood-like boards to be manufactured to have custom cross-sectional areas and lengths, such as lengths of 8 ft 8 in (2.6 m), 40 ft (12.19 m), 60 ft (18.29 m), and 80 ft (24.38 m).

A. Hydraulic Cement

The extrudable cementitious compositions and the cementitious building products include one or more types of hydraulic cement. As discussed below, while the rheology-modifier can contribute a majority of the strength to the extrudable composition and green extrudate, the hydraulic cement can contribute a majority of the strength to the cementitious composite or building product after curing or hydrating begins. Examples of hydraulic cements and associated properties and reactions during the entire manufacturing process as well as in the finished fiber-reinforced building product can be found in the incorporated references. For example, the hydraulic cement can be white cement, grey cement, aluminate cement, Type I-V cement, and the like.

The extrudable composition can include various amounts of hydraulic cement. Usually, the amount of hydraulic cement in an extrudable composition is described as a wet percentage (*e.g.*, wet weight % or wet volume %) so as to account for the water that is present. As such, the hydraulic cement can be present from about 25% to about 69.75% by wet weight, more preferably from about 35% to about 65% by wet weight, and most preferably from about 40 to 60% by wet weight of the extrudable composition.

Briefly, within the extruded product, the hydraulic cement forms a cement paste or gel by reacting with water, where the speed of the reaction is influenced by the curing temperature. In some embodiments, the speed of the reaction can further be increased through the use of set accelerators, and the strength and physical properties of the cementitious building product are modulated by a high concentration of fibers. Usually, the amount of hydraulic cement in a cured cementitious composite is described as a dry percentage (*e.g.*, dry weight % or dry volume %). The amount of hydraulic cement can vary in a range from about 40% to about 90% by dry weight, more preferably about 50% to about 80% by dry weight, and most preferably about 60% to about 75% by dry weight. It should be recognized that some products can use more or less hydraulic cement, as needed and depending on other constituents.

The hydraulic cement, more specifically the cement or hydraulic paste - formed by reacting or hydrating with water, will typically contribute at least about 50% of the overall binding strength of the inventive building products, preferably at least about 70%, more preferably at least about 80%, and most preferably at least about 90% of the overall binding strength. That is a direct result of maintaining a relatively low effective water to cement ratio (*e.g.*, by one or more of controlled early heating to slowly remove a portion of the water by evaporation and/or absorption of water by fibers and/or rheology modifying agent).

B. Water

In one embodiment, water can be used in relatively high amounts within the extrudable composition to increase the rate of mixing, extrudability, cure rate, and/or porosity of the finished extruded products. While adding more water has the effect of reducing compressive strength, this may be a desirable by-product in order to yield a product that can be sawed, sanded, nailed, screwed, and otherwise used like wood or as a wood substitute. Additionally, high concentrations of water in the extrudable composition or extrudate can be reduced by evaporation or heating. When water is evaporated from the green extrudate, form-stability and porosity can be increased simultaneously. This is in contrast to typical concrete compositions and methods, in which increasing porosity decreases green strength, and vice versa.

Accordingly, the amount of water within the various mixtures described herein can be drastically varied over a large range. For example, the amount of water in the extrudable composition and green extrudate can range from about 25% by wet weight to about 69.75% by wet weight, more preferably from about 35% to about 65%, and most preferably from about 40% to about 60% by wet weight. On the other hand, the cured composite or hardened building product can have free water at less than 10% by wet weight, more preferably less than about 5% by wet weight, and most preferably less than about 2% water by weight; however, additional water can be bound with the rheology-modifier, fibers, or aggregates.

The amount of water in the extrudate during the rapid reaction period should be sufficient for curing or hydrating so as to provide the finished properties described herein. Nevertheless, maintaining a relatively low water to cement ratio (*i.e.*, w/c) increases the strength of the final cementitious building products. Accordingly, the actual or nominal water to cement ratio will typically initially range from about 0.75 to about 1.2. In some instances the actual or nominal water to cement ratio can be greater than 1.5 or 1.75 in order to yield building products having very high porosity and/or less hardness and increased sawability, nailability and/or screwability.

The water to cement ratio affects the final strength of the hydraulic cement binder. Controlled removal of water by evaporation (*e.g.*, over a period of days, such as at least about two days) not only increases green strength in the short term, it can increase long term strength of the cement binder by reducing the water to cement ratio. Additionally, the water can be used to provide porosity to the finished product by being present during the forming process and then post forming removal of a portion of the water. The post forming removal of water results in homogenously distributed porosity in the finished product. Also, this can decrease the water amount, increase the strength of the binder, and provide a correct strength ratio of water to binder. The water to cement ratio following controlled evaporation by heating will preferably be less than about 0.5 (*i.e.*, in a range of about 0.1 to about 0.5, preferably about 0.2 to about 0.4, more preferably about 0.25 to about 0.35, and most preferably about 0.3).

The amount of water is also selected in order to yield a building product having a desired density. Because the ability to saw, nail or screw into cementitious building products according to the disclosure is related to the density (*i.e.*, the lower the density, the easier it is to saw, nail and/or screw into the composite using ordinary wood working tools), the amount of water can be selected to yield a product having a desired level of porosity. In general, increasing the amount of water that is removed by evaporation prior to, during or subsequent to curing reduces the density of the final cured building product.

In the case where it is desirable for the building products to have properties similar to those of wood, it will be preferable for the density to be less than about 1.2 g/cm$^3$, more preferably less than about 1.15 g/cm$^3$, even more preferably less than about 1.1 g/cm$^3$, and most preferably less than about 1.05 g/cm$^3$.

In addition to having wood-like properties that allow for sawing, nailing and screwing using conventional wood working tools, building materials according to the disclosure can be finished using a router and planer.

C. Fibers

The extrudable composition and extruded building products include a relatively high concentration of fibers compared to conventional concrete compositions. Moreover, the fibers are typically substantially homogeneously dispersed throughout the cementitious composition in order to maximize the beneficial properties imparted by the fibers. The fibers are present in order to provide structural reinforcement to the extrudable composition, green extrudate, and the cementitious building product. Fibers also provide nail and screw hold by providing a spring back effect, imparting micro level toughness, preventing formation of cracks or catastrophic failure at the micro level around the hole formed by the nail or screw. Fibers that can absorb substantial quantities of water (*e.g.*, wood, plant or other cellulose-based fibers) may be used to reduce the effective water/cement ratio (*i.e.*, based on water that is actually available for cement hydration).

Various types of fibers may be used in order to obtain specific characteristics. For example, the cementitious compositions can include naturally occurring organic fibers extracted from hemp, cotton, plant leaves or stems, hardwoods, softwoods, or the like, fibers made from organic polymers, examples of which include polyester nylon *(i.e.,* polyamide), polyvinylalcohol (PVA), polyethylene, and polypropylene, and/or inorganic fibers, examples of which include glass, graphite, silica, silicates, microglass made alkali resistant using borax, ceramics, carbon fibers, carbides, metal materials, and the like. The preferred fibers, for example, include glass fibers, woolastanite, abaca, bagasse, wood fibers *(e.g.,* soft pine, southern pine, fir, eucalyptus, recycled newspaper, and other types of fibers), cotton, silica nitride, silica carbide, tungsten carbide, and Kevlar; however, other types of fibers can be used.

The fibers used in making the cementitious compositions can have a high length to width ratio (or "aspect ratio") because longer, narrower fibers typically impart more strength per unit weight to the finished building product. The fibers can have an average aspect ratio of at least about 10:1, preferably at least about 50:1, more preferably at least about 100:1, and most preferably greater than about 200:1.

In one embodiment, the fibers can be used in various lengths such as, for example, from about 0.1 cm to about 2.5 cm, more preferably from about 0.2 cm to about 2 cm, and most preferably about 0.3 cm to about 1.5 cm. In one embodiment, the fibers can be used in lengths less than about 5 mm, more preferably less than about 1.5 mm, and most preferably less than about 1 mm.

In one embodiment, very long or continuous fibers can be admixed into the cementitious compositions. As used herein, a "long fiber" is meant to refer to a thin long synthetic fiber that is longer than about 2.5 cm. As such, a long fiber can be present with lengths ranging from about 2.5 cm to about 10 cm, more preferably about 3 cm to about 8 cm, and most preferably from about 4 cm to about 5 cm.

The concentration of fibers within the extrudable cementitious compositions can vary widely in order to provide various properties to the extruded composition and the finished product. Generally, the fibers can be present in the extrudable composition in a concentration of greater than about 5% by wet volume, more preferably greater than about 7% by wet volume, and even more preferably, greater than about 8% by wet volume. For example, in one embodiment, the fibers are present in the extrudable composition in a concentration ranging from about 5% to about 40%, and even more preferably from about 8% to about 30%, and most preferably about 10% to about 25% by wet volume.

The concentration of fibers within the cured cementitious composites can be in the range of greater than about 10% by dry volume, and more preferably, greater than about 15% by dry volume, and even more preferably, greater than about 20% by dry volume. For example, in some embodiments, the fibers are present within the cured cementitious composition in a range of from about 10% to about 65% by dry volume, more preferably from about 15% to about 50%, and even more preferably from about 20% to about 40 by dry volume.

Additionally, specific types of fibers can vary in amount in the compositions. Accordingly, PVA can be present in a cured cementitious composition up to about 5% by dry volume, more preferably from about 1% to about 4%, and most preferably from about 2% to about 3.25%. Soft fibers and/or woods can be present in a cured cementitious composition in amounts described above with respect to general fibers or present up to about 10% by dry volume, more preferably up to about 5% by dry volume, and most preferably up to about 3.5% by dry volume. Newspaper fibers can be present in a cured cementitious composition in amounts described above with respect to general fibers or present up to about 35% by dry volume, more preferably from about 10% to about 30% by dry volume, and most preferably from about 15% to about 25% by dry volume.

In one embodiment, the type of fiber can be selected based on the desired structural features of the finished product comprised of the cementitious building product, where it can be preferred to have dense synthetic fibers compared to light natural fibers or vice versa. Typically, the specific gravity of natural or wood fibers range from about 0.4 for cherry wood fibers to about 0.7 for birch or mahogany. On the other hand, synthetic fibers can have specific gravities that range from about 1 for polyurethane fibers, about 1.3 for polyvinyl alcohol fibers, about 1.5 for Kevlar fibers, about 2 for graphite and quartz glass, about 3.2 for silicon carbide and silicon nitride, about 7 to about 9 for most metals with about 8 for stainless steel fibers, about 5.7 for zirconia fibers, to about 15 for tungsten carbide fibers. As such, natural fibers tend to have densities less than 1, and synthetic fibers tend to have densities from about 1 to about 15.

In one embodiment, various fibers of differing densities can be used together within the cementitious compositions. For example, it can be beneficial to combine the properties of a cherry wood fiber with a silicon carbide fiber. Accordingly, a combined natural/synthetic fiber system can be used at ratios ranging from about 10 to about 0.1, more preferably about 6 to about 0.2, even more preferably about 5 to about 0.25, and most preferably about 4 to about 0.5.

In one embodiment, a mixture of regular or long length fibers, such as pine, fir, or other natural fibers, may be combined with micro-fibers, such as woolastinite or micro glass fibers, to provide unique properties, including increased toughness, flexibility, and flexural strength, with the larger and smaller fibers acting on different levels within the cementitious composition.

In view of the foregoing, the fibers are added in relatively high amounts in order to yield a cementitious building product having increased flexural strength, elongation, deflection, deformability, and flexibility. For example, the high amount of fibers yields a cementitious building product that can have a fastening rod inserted therein, with a pullout resistance that resists extraction. The fibers contribute to the ability of the cementitious building product to be sawed, screwed, sanded and polished like wood, or the nap of the fibers can be exposed by buffing to yield a suede-like or fabric-like surface.

Additionally, the extrudable cementitious composition and cured cementitious composites can include saw dust. While saw dust may be considered to be fibrous, it is usually comprised of a plurality of fibers held together with lignin or other natural agglomerating material. Fibers can provide characteristics to the extrudable cementitious composition or cured cementitious composites that differ somewhat from the characteristics provided by true fibers. In some instances, saw dust can function as a filler. Saw dust can be obtained as a byproduct from lumber mills and other facilities where lumber or wood products are cut or milled. The extrudable cementitious composition can include saw dust up to 10% by wet weight, preferably up to 15% by wet weight, more preferably up to 20% by wet weight, and most preferably from about 10% to about 20% by wet weight. Accordingly, the cured cementitious composites can include saw dust up to 12% by dry weight, preferably up to 18% by dry weight, more preferably up to 25% by dry weight, and most preferably from about 12 to about 20% by dry weight.

D. Rheology Modifying Agent

In preferred embodiments of the present disclosure, the extrudable cementitious compositions and the cementitious building products include a rheology-modifying agent ("rheology-modifier"). The rheology-modifier can be mixed with water and fibers to aid in substantially uniformly (or homogeneously) distributing the fibers within the cementitious composition. Additionally, the rheology-modifier can impart form-stability to an extrudate. In part, this is because the rheology-modifier acts as a binder when the composition is in a green state to increase early green strength so that it can be handled or otherwise processed without the use of molds or other shape-retaining devices.

As noted above, it is further now been discovered that when using the rheology modifiers in the compositions of the present disclosure, specifically when the green extrudate is heated to a temperature of greater than 65°C, the retarding effect of conventional rheology modifying agents in typical compositions is counteracted, thereby increasing the strength development of the cement. Specifically, above 65°C, the rheology modifying agent is precipitated out of solution and the hydration can proceed faster, which leads to a higher strength development.

Additionally, the rheology-modifying agent helps control porosity (*i.e.*, yields uniformly dispersed pores when water is removed by evaporation). Further, the rheology-modifying agent can impart increased toughness and flexibility to a cured composite which can result in enhanced deflection characteristics. Thus, the rheology-modifier cooperates with other compositional components in order to achieve a more deformable, flexible, bendable, compactable, tough, and/or elastic cementitious building product.

For example, variations in the type, molecular weight, degree of branching, amount, and distribution of the rheology-modifier can affect the properties of the extrudable composition, green extrudate, and cementitious building products. As such, the type of rheology-modifier can be any polysaccharide, proteinaceous material, and/or synthetic organic material that is capable of being or providing the rheological properties described herein. Examples of some suitable polysaccharides, particularly cellulosic ethers, include methylhydroxyethylcellulose, hydroxymethylethylcellulose, carboxymethylcellulose, methylcellulose, ethylcellulose, hydroxyethylcellulose, and hydroxyethylpropylcellulose, starches such as amylopectin, amylose, starch acetates, starch hydroxyethyl ethers, ionic starches, long-chain alkyl-starches, dextrins, amine starches, phosphate starches, and dialdehyde starches, polysaccharide gums such as seagel, alginic acid, phycocolloids, agar, gum arabic, guar gum, locust bean gum, gum karaya, gum tragacanth, and the like.

Examples of some proteinaceous materials include collageris, caseins, biopolymers, biopolyesters, and the like. Examples of synthetic organic materials that can impart rheology-modifying properties include petroleum-based polymers (*e.g.*, polyethylene, polypropylene), latexes (*e.g.*, styrene-butadiene), and biodegradable polymers (*e.g.*, aliphatic polyesters, polyhydroxyalkanoates, polylactic acid, polycaprolactone), polyvinyl chloride, polyvinyl alcohol, and polyvinyl acetate. Clay can also act as a rheology-modifier to aid in dispersing the fibers and/or imparting form stability to the green extruded composition.

The amount of rheology-modifier within the extrudable composition and cementitious building product can vary from low to high concentrations depending on the type, branching, molecular weight, and/or interactions with other compositional components. For example, the amount of rheology-modifier present in the extrudable cementitious compositions can range from about 0.1 % to about 10% by wet volume, preferably from about 0.25% to about 5% by wet volume, even more preferably about 0.5% to about 5%, and most preferably from about 1% to about 3% by wet volume. The amount of rheology-modifier present in the cured cementitious compositions can range from about 0.1% to about 20% by dry volume, more preferably from about 0.3% to about 10% by dry volume, even more preferably about 0.75% to about 8%, and most preferably about 1.5% to about 5% by dry volume.

Additionally, examples of synthetic organic materials, which are plasticizers usually used along with the rheology-modifier, include polyvinyl pyrrolidones, polyethylene glycols, polyvinyl alcohols, polyvinylmethyl ethers, polyacrylic acids, polyacrylic acid salts, polyvinylacrylic acids, polyvinylacrylic acid salts, polyacrylimides, ethylene oxide polymers, polylactic acid, synthetic clay, styrene-butadiene copolymers, latex, copolymers thereof, mixtures thereof, and the like. For example, the amount of plasticizers in the composition can range from no plasticizer to about 40% plasticizer by dry weight, more preferably about 1% to about 35% plasticizer by dry weight, even more preferably from about 2% to about 30%, and most preferably from about 5% to about 25% by dry weight.

The rheology modifying agent will typically impart less than 50% of the overall binding strength of the inventive building products. They may indirectly increase the strength of the cement paste, however, by reducing the effective water/cement ratio. Water that is bound by the rheology modifying agent is not generally readily available for hydration of the hydraulic cement binding, thereby reducing the overall amount of water that is available for cement hydration.

### E. Filler

In one embodiment, the extrudable composition, green extrudate, and cured cementitious composite can include fillers. Alternatively, there are instances where filler materials are specifically excluded. Fillers, if used at all, are generally included in smaller amounts and mainly to decrease the cost of the extruded products. Because it is desired to obtain extruded products in the form of wood-like building material having the properties of wood, fillers should be selected that do not yield a product that is too hard and difficult to work with. Examples, of fillers include saw dust as described above, as well as expanded clays, perlite, vermiculite, kaolin, wollastonite, diatomaceous earth, plastic spheres, glass spheres, granulated rubber, granulated plastic, exfoliated vermiculite, talk, and mica are more preferable because they decrease the weight and density of the cementitious building product. Some fillers, such as vermiculite, rubber, and plastic spheres, have elasticity, and can provide elastic spring-back to provide better gripping strength to a fastening rod. Others, such as perlite and glass spheres, are friable, which causes or allows them to be crushed when driving in a fastening rod, thereby increasing or providing friction to resist pullout. Additional information regarding the types and amounts of fillers that can be used in the cementitious compositions can be obtained in the incorporated references. Fillers such as exfoliated vermiculite, talk and mica can be platelet shaped, and can longitudinally align within the green extrudate by the extruder.

In one embodiment, the extrudable cementitious compositions can include a widely varying amount of fillers. Specifically, when used, fillers can each independently be present at less than about 10% by wet weight, preferably less than about 7% by wet weight, more preferably less than about 3% by wet weight, and most preferably between about 2% to about 12% by wet weight.

In one embodiment, the cured cementitious compositions can include a widely varying amount of fillers. Specifically, when used, fillers can each independently be present at less than about 15% by dry weight, preferably less than about 10% by dry weight, more preferably less than about 5% by dry weight, and most preferably between about 3% to about 15% by dry weight. In some instances, fillers such as limestone can be present up to about 70% by dry weight. For example, when included in a cured cementitious composition, vermiculite can be present from about 2% by dry weight to about 20% by dry weight, and preferably from about 3% by dry weight to about 16% by dry weight.

### F. Other Materials

In one embodiment, a set accelerator can be included in the extrudable composition, green extrudate, and cementitious building product. As described herein and in the incorporated references, the set accelerator can be included so as to decrease the duration of the induction period or hasten the onset of the rapid reaction period. Accordingly, traditional set accelerators such as $MgCl_2$, $N_ACO_A$, $KCO_3$ $CaCl_2$ and the like can be used, but may result in a decrease in the compressive strength of the cementitious building product; however, this may be a desirable by-product in order to yield a product that can be sawed, sanded, nailed, and screwed like wood. For example, the traditional set accelerators can be present in the green extrudate from about 0.001 % to about 5% by total dry weight, more preferably from about 0.05% to about 2.5% by dry weight, and most preferably from about 0.11% to about 1% by dry weight.

As noted above, retarding agents, also known as retarders, delayed-setting or hydration control admixtures, may also optionally be used to retard, delay, or slow the rate of cement hydration. They can be added to the extrudable composition, green extrudate, and cementitious building product. Examples of retarding agents include lignosulfonates and salts thereof, hydroxylated carboxylic acids, borax, gluconic acid, tartaric acid, mucic acid, and other organic acids and their corresponding salts, phosphonates, monosaccharides, disaccharides, trisaccharides, polysaccharides, certain other carbohydrates such as sugars and sugar-acids, starch and derivatives thereof, cellulose and derivatives thereof, water-soluble salts of boric acid, water-soluble silicone compound, sugar-acids, and mixtures thereof. Exemplary retarding agents are commercially available under the tradename Delvo®, from Masterbuilders (a division of BASF, The Chemical Company, Cleveland, Ohio).

In one embodiment, the cementitious compositions can include an additive material. Alternatively, there are instances where additive materials are specifically excluded. The additives, if used at all, are generally included in smaller amounts and mainly to decrease the cost of the extruded products. In some instances, the additives can be used to modify the strength of the cured product. Some examples of additives can be pozzolanic materials that react with water, have a high pH, and are somewhat cementitious. Examples of pozzolanic materials include pozzolanic ash, slade, fly ash, silica flume, slag, and the like.

Additionally, the cementitious compositions can include dyes or pigments to alter the color or provide custom-colored cementitious composite products. Dyes or pigments that are routinely used in cementitious compositions can be applied to the present disclosure.

Other specific materials that can be present in the cementitious compositions can include guar gum, darauair, $Ti0_2$, Delvo®, glenium 30/30, LatexAc 100, pozzilith NC534, and other similar materials. For example, $Ti0_2$ can be present from about 0.5% to about 1.5% dry weight, preferably from about 0.7% to about 1.3% by dry weight; delvo can be present from about 0.05% to about 0.5% by dry weight, preferably from about 0.06% to about 0.37% by dry weight; glenium 30/30 can be present from about 0.25% to about 0.5% by dry weight, preferably from about 0.3% to about 0.4% by dry weight; LatexAc 100 can be present from about 0.75% to about 3% by dry weight, preferably from about 0.95% by dry weight to about 2.80% by dry weight; and pozzilith NC534 can be present from about 1.25% to about 4% by dry weight, preferably from about 1.4% to about 1.5% by dry weight.

In one embodiment, the cementitious compositions can include additional optional materials such as dispersants, polymeric binders, nucleating agents, volatile solvents, salts, buffering agents, acidic agents, coloring agents, and the like. Specifically, when used, these additional optional materials, some of which are discussed in the incorporated references, can each independently be present at less than about 10% by dry weight, more preferably less than about 5% by dry weight, and most preferably less than about 1% by dry weight.

In one embodiment, a substantially cured cementitious extrudate that is reinforced with fibers can be coated with a protective or sealing material such as a paint, stain, varnish, texturizing coating, and the like. As such, the coating can be applied to the cementitious building product after it is substantially cured. For example, the cementitious building product can be stained so that the fibers present on the surface are a different shade from the rest of the product, and/or texturized so as to resemble a wooden product.

Sealants known in the concrete industry can be applied to the surface and/or incorporated into the cementitious matrix in order to provide waterproofing properties. These include silanes and siloxanes.

MANUFACTURING BUILDING PRODUCTS

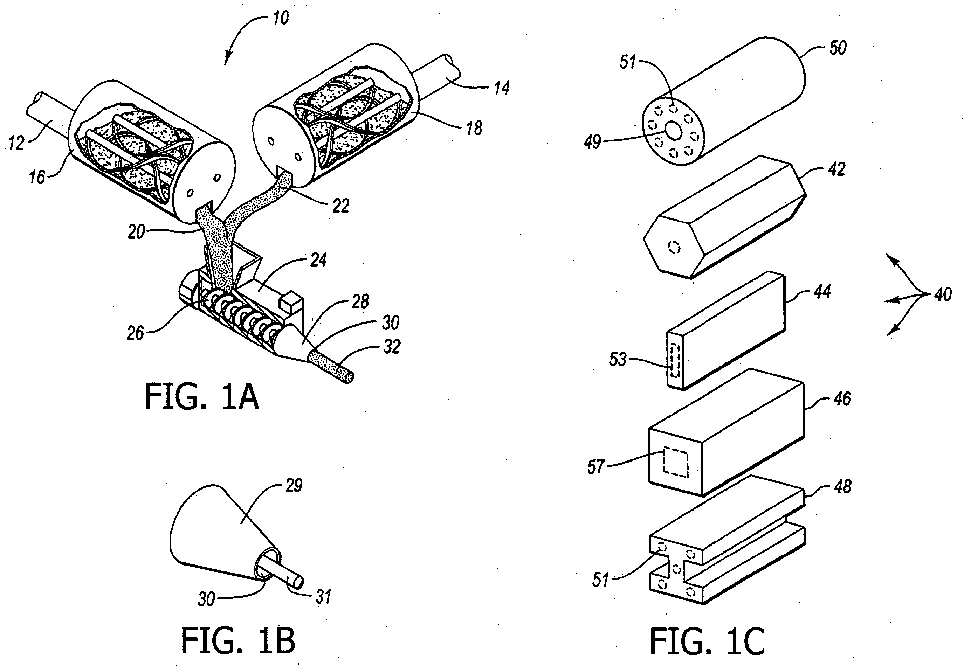

Figure 1A is a schematic diagram that illustrates an embodiment of a manufacturing system and equipment that can be used during the formation of an extrudable composition, green extrudate, cementitious composite, and/or building product. It should be recognized that this is only one example illustrated for the purpose of describing a general processing system and equipment, where various additions and modifications can be made thereto in order to prepare the cementitious compositions and building products. Also, the schematic representation should not be construed in any limiting manner as to the presence, arrangement, shape, orientation, or size of any of the features described in connection therewith. With that said, a more detailed description of the system and equipment that can prepare the cementitious compositions as well as cementitious building products that are in accordance with the present disclosure is now provided.

As shown in Figure 1A, which depicts an embodiment of an extrusion system 10 in accordance with the present disclosure, such an extrusion system 10 includes a first mixer 16, optional second mixer 18, and an extruder 24. The first mixer 16 is configured to receive at least one feed of materials through at least a first feed stream 12 for being mixed into a first mixture 20. After adequate mixing, which can be performed under high shear, while maintaining a temperature below that which accelerates hydration, the first mixture 20 is removed from the first mixer 16 as flow of material ready for further processing.

By mixing the first mixture 20 apart from any additional components, the respective mixed components can be homogeneously distributed throughout the composition. For example, it can be advantageous to homogeneously mix the fibers with at least the rheology modifier and water before combining them with the additional components. As such, the rheology-modifier, fibers, and/or water are mixed under high shear so as to increase the homogeneous distribution of fibers therein. The rheology modifying agent and water form a plastic composition having high yield stress and viscosity that is able to transfer the shearing forces from the mixer down to the fiber level. In this way, the fibers can be homogeneously dispersed throughout the mixture using much less water than required in the Hatschek and traditional paper-making procedures, which typically require up to 99% water to disperse the fibers.

The optional second mixer 18 has a second feed stream 14 that supplies the material to be mixed into a second mixture 22, where such mixing can be enhanced by the inclusion of a heating element. For example, the second mixer 18 can receive and mix the additional components, such as the additional water, set accelerators, hydraulic cement, plasticizers, aggregates, nucleating agents, dispersants, polymeric binders, volatile solvents, salts, buffering agents, acidic agents, coloring agents, fillers, and the like before combining them with other components to form an extrudable composition. The second mixer 18 is optional because the additional components could be mixed with the fibrous mixture in the first mixer 16.

As in the illustrated schematic diagram, the extruder 24 includes an extruder screw 26, optional heating elements (not shown), and a die head 28 with a die opening 30. Optionally, the extruder can be a single screw, twin screw, and/or a piston-type extruder.

After the first mixture 20 and second mixture 22 enter the extruder they can be combined and mixed into an extrudable composition.

By mixing the components, an interface is created between the different components, such as the rheology-modifying agent and fibers, which allows for individual fibers to pull apart from each other. By increasing the viscosity and yield thrust with the rheology-modifying agent, more fibers can be substantially homogenously distributed throughout the mixture and final cured product. Also, the cohesion between the different components can be increased so as to increase inter-particle and capillary forces for enhanced mixing and form-stability after extrusion. For example, the cohesion between the different components can be likened to clay so that the green extrudate can be placed on a pottery wheel and worked similar to common clays that are fabricated into pottery.

In one embodiment, additional feed streams (not shown) can be located at any position along the length of the extruder 24. The availability of additional feed streams can enable the manufacturing process to add certain components at any position so as to modify the characteristics of the extrudable composition during mixing and extruding as well as the characteristics of the green extrudate after extrusion. For example, in one embodiment it can be advantageous to supply the set accelerator into the composition within about 60 minutes to within about 1 second before being extruded, especially when it is C-S-H. More preferably, the set accelerator is mixed into the composition within about 45 minutes to about 5 seconds before being extruded, even more preferably within about 30 minutes to about 8 seconds, and most preferably within about 20 minutes to about 10 seconds before being extruded. This can enable the green extrudate to be configured for increased form-stability and a shortened induction period before the onset of the rapid reaction period.

Accordingly, the post-extrusion induction period can be substantially shortened so as to induce the onset of the rapid reaction period to begin within about 30 seconds to about 30 minutes after being extruded, more preferably less than about 20 minutes, even more preferably less than about 10 minutes, and most preferably less than about 5 minutes after being extruded.

In another embodiment, the set accelerator can be separately supplied into the extruder from the other components so that the induction period has a duration of less than about 2 hours, more preferably less than 1 hour, even more preferably less than about 40 minutes, and most preferably less than 30 minutes.

With continuing reference to Figure 1A, as the cementitious composition moves to the end of the extruder 24, it passes through the die head 28 before being extruded at the die opening 30. The die head 28 and die opening 30 can be configured into any shape or arrangement so long as to produce an extrudate that is capable of being further processed or finished into a building product. In the illustrated embodiment, it can be advantageous for the die opening 30 to have a circular diameter so that the extrudate 32 has a rod-like shape. Other exemplary cross-sectional shapes are illustrated in Figure 1C, including hexagonal 42, rectangular 44, square 46, or I-beam 48. The extruded building products can be characterized as being immediately form-stable while in the green state. That is, the extrudate can be immediately processed without deforming, wherein the processing can include cutting, sawing, shaping, milling, forming, drilling, and the like. As such, the extrudate in the green state does not need to be cured before being prepared into the size, shape, or form of the finished cementitious building product. For example, the green-state processing can include the following: (a) creating boards, by milling, sawing, cutting, or the like, that have specified dimensions, such as width, thickness, length, radius, diameter, and the like; (b) bending the extrudate so as to form a curved cementitious product, which can be of any size and shape, such as, a curved chair leg, curved arches, and other ornamental and/or structural members;

(c) creating boards having lengths that exceed or are different from standard wood board lengths, which can include shorter or longer board lengths of 6 ft 9 in (2.06 m), 8 ft 8 in (2.64 m), 9 ft 1 in (2.77 m), 27 ft (8.23 m), 40 ft (12.19 m), 41 ft 12.50 m), 60 ft (18.29 m), 61 ft (18.59 m), soft, 81 ft (24.69 m), and the like; (d) texturizing with rollers, which can impart wood grain-like surfaces to the cementitious building product; (e) having the surface painted, waterproofed, or otherwise coated, which can apply coatings comprised of silanes, siloxanes, latex, C-S-H, and the like; and (f) transported, shipped, or otherwise moved and/or handled. Also, the byproducts that are produced from the green-state processing can be placed into the feed compositions and reprocessed. Thus, the green cementitious byproducts can be recycled, which can significantly reduce manufacturing costs.

Figure 1 B is a schematic diagram of a die head 29 that can be used with the extrusion process of Figure 1A. As such, the die head 29 includes a die opening 30 that has a hole forming member 31. The hole forming member 31 can be circular as shown, or have any cross-sectional shape. As such, the hole forming member 31 can form a hole in the extrudate, which is depicted in Figure 1 C. Since the extrudate can be form-stable immediately upon extrusion, the hole can retain the size and shape of the hole forming member 31. Additionally, various die heads having hole forming members that can produce annular extrudates are well known in the clay industry and can be adapted or modified, if needed, to be usable with the extrusion processes in accordance with the present disclosure.

With reference now to Figure 1C, additional embodiments of extrudates 40 are depicted. Accordingly, the die head and die opening of Figure 1A or 1B can be modified or altered so as to provide extrudates 40 having various cross-sectional areas, where the extrudate 40 cross-sectional area can be substantially the same as the cross-sectional area of the die opening. For example, the cross-sectional area can be a hexagon 42, rectangle 44 (e.g., two-by-four, one-by-ten, etc.), square 46, I-beam 48, or a cylinder 50, optionally having a continuous hole 49. Also, additional cross-sectional shapes can be prepared via extrusion. More particularly, the die head and die opening of Figure 1B can be used so that the hexagon 42, rectangle 44 (*e.g.*, two-by-four, one-by-ten, etc.), square 46, I-beam 48, or cylinder 50 can optionally include continuous circular holes 51, rectangular holes 53, square holes 57, or the like. Also, complex dies heads and openings can be used for preparing the cylinder 50 having the continuous hole 49 and a plurality of smaller holes 51. Moreover, any general cross-sectional shape can be further processed into a specific shape such as, for example, a two-by-four from a four-by-four square shape. Alternatively, the die orifice may yield oversized products that are later trimmed to the desired specifications in order to ensure greater uniformity.

Accordingly, the foregoing processes can be usable for extruding building products with one or more continuous holes. For example, a two-by-four or other board can be extruded having one or more holes into which rebar can be inserted, either while in a green state or after curing. In the case of a cured board, the rebar may be held in place within the hole using epoxy or other adhesive to provide strong bonding between the rebar and board. For example, the cylinder 50 of Figure 1C, as well as the other shapes, can be fabricated into large building structures, such as utility, telephone, or power line poles. These structures can optionally include a large interior opening 49 to reduce the mass and cost, along with smaller holes 51 in the wall to permit the insertion of strengthening rebar, as shown. In one embodiment, a telephone pole has an outer diameter of about fourteen inches, a wall thickness of about three inches, and an interior hole diameter of about eight inches. The plurality of spaced-apart half-inch holes can be provided within the three-inch wall in order to accommodate the placement of rebar.

In one embodiment, the extrudable composition is aerated before being extruded. Some processes can employ an active aerating process to increase the amount of air in the extrudable composition and thereby form air voids or multi-cellular formations. Exemplary processes can include adding reactive materials that decompose and form gases at elevated temperatures such as baking soda ($NaHCO_3$), ammoniumcarbonate (($NH_4$)$_2CO_3$), ammoniumhydrogencarbonate ($NH_4HCO_3$), ammoniumcarbamate ($NH_2COONH_4$), and aluminum powder. The active or passive aerating can provide an extrudate and/or cementitious building product that has small to large air voids or cellular formations. For example, an aerated cementitious composite can have a porosity from about 40% to about 75%, more preferably from about 45% to about 65%, and most preferably about 50% to about 60%. Thus, aerating or de-airing the extrudable composition can provide the ability to increase or decrease the density of the cementitious building product.

The porosity of a cementitious building product can be tailored to specific and custom needs. This can allow for the manufacturing process to be tailored to provide a porosity that correlates with the intended use of the cementitious building product. For example, wood-like boards can be configured to have higher porosities, which enable improved nailing, screwing, cutting, drilling, milling, sawing, and the like. As such, the increased porosity can be used to enhance the wood-like properties of the cementitious material. Thus, the porosity along with the fiber content can be modified to correlate with intended uses.

In one embodiment, the extrudate can be further processed in a dryer or autoclave. The dryer can be useful for drying the extrudate so as to remove excess water, which can increase porosity and/or form-stability. On the other hand, the extrudate can be processed through an autoclave in order to increase the rate of curing.

Figure 2 is a schematic diagram depicting an alternative extrusion process that can be used to prepare the cementitious building products in accordance with the present disclosure. As such, the extrusion process can be considered to use a roller-extrusion system 200 that uses rollers to extrude the wet cementitious material into a green intermediate extrudate. Such a roller extrusion system 200 includes a mixer 216 configured to receive at least one feed of materials through a feed stream 212 for being mixed into a mixture 220. After adequate mixing, which can be performed as described herein, the mixture 220 is removed from the mixer 216 as flow of material ready for further processing.

The mixture 220 is then applied to a conveyor 222 or other similar transporter so as to move the material from the site of application. This allows the mixture to be formed into a cementitious flow 224 that can be processed. As such, the cementitious flow 224 can be passed under a first roller 226 that is set at a predefined distance from the conveyor 222 and having a predefined cross-sectional area with respect thereto, which can press or shape the cementitious flow 224 into a green intermediate extrudate 228. Optionally, the conveyor 222 can then deliver the green extrudate 228 through a first calender 230 comprised of an upper roller 230a and a lower roller 230b. The calender 230 can be configured to have a predefined cross-sectional area so that the green intermediate extrudate 228 is further shaped and/or compressed into a shaped green intermediate extrudate 242. Also, an optional second calender 240 comprised of a first roller 240a and a second roller 240b can be used in place of the first calender 230 or in addition thereto A combination of calenders 230, 240 can be favorable for providing a green extrudate that is substantially shaped as desired. Alternatively, the first roller 226 can be excluded and the cementitious flow 224 can be processed through any number of calenders 230, 240.

Additionally, the shaped green extrudate 242, or other extrudate described here, such as from the process illustrated in Figure 1A, can be further processed by a processing apparatus 244. The processing apparatus 244 can be any type of equipment or system that is employed to process the green extrudate materials as described herein. As such, the processing apparatus 244 can saw, mill, cut, bend, coat, dry or otherwise shape or further process the shaped green extrudate 242 into a processed extrudate 246. Also, the byproduct 260 obtained from the processing apparatus 244 can be recycled into the feed composition 212, or applied to the conveyor 222 along with the mixture 220. When the processing apparatus 244 is a dryer, the shaped green extrudate 242 can be heated to a temperature that rapidly removes water so as to form voids in the processed extrudate 246, which increases porosity.

In one embodiment, a combined curing/drying process can be used to cure and dry the hydraulic cement to form the extruded cementitious composite. For example, the combined curing/drying process can be performed at a temperature of from about 75-99°C for 48 hours in order to obtain about 80% of the final strength. However, larger blocks can take additional time in any curing and/or drying process.

In another embodiment, combined steam curing and autoclaving processes are used to cure the hydraulic cement. Typically, the cement is initially steam cured to bring the temperature of the hydraulic cement to a temperature of from about 65-99°C and is then heated in an autoclave at temperatures of about 190°C or greater at 12 bars for approximately 12 hours. By autoclaving, the resulting cementitious product obtains greater than about 150%, and in some embodiments, 200% of the final 28-day strength.

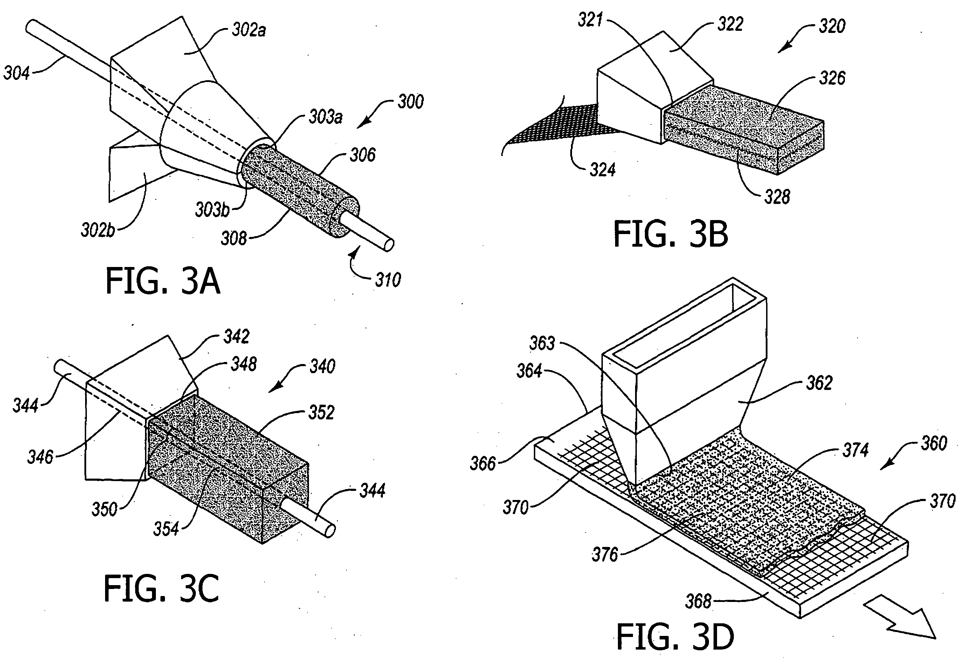

In accordance with Figures 3A-D, the extrusion system depicted in Figure 1A can be modified so as to be capable of extruding the extrudate around a supplemental supporting element or reinforcing member such as rebar (metal or fiberglass), wire, wire mesh, fabric, and the like. By co-extruding the cementitious composition with a reinforcing wire, fabric, or rebar the resulting cementitious building product can have greater deflection and bending strength before breaking. Alternatively, the roller-extrusion system 200 can be configured to prepare reinforced green bodies and cementitious building products as described below.

With reference now to Figure 3A, one embodiment of a co-extrusion system 300 is depicted. The co-extrusion system 300 includes at least two or more die heads 302a and 302b. The die heads 302a and 302b are oriented so that the respective die openings 303a and 303b produce extrudate that intermingles together into a uniform extrudate 308. Additionally, the co-extrusion system 300 includes a means for placing a supplemental supporting element such as rebar 304 within the uniform extrudate 308, wherein the means can include a conveyor, pulley, dive mechanism, movable die head, rebar pushing mechanism, rebar pulling mechanism, and the like.

As depicted, the rebar 304 is passed between the first die opening 303a and the second die opening 303b. This allows the rebar 304 to be at least partially or completely encapsulated within the uniform extrudate 308, wherein the encapsulated rebar 306 is shown by dashed lines. As depicted, the rebar 304 can have a first end 310 that is oriented past the die openings 303a and 303b before any extrudate is applied to the rebar 304 so that the first end 310 is not encapsulated. The naked rebar can enable the rebar to be pulled past the die openings 303a and 303b, and facilitates easy manipulation and handling post-extrusion.

With reference now to Figure 3B, another embodiment of a co-extrusion system 320 is depicted. The co-extrusion system 320 includes a die head 322 and a means for supplying a wire or fabric mesh 324 into the extrudate 326 wherein the means can include a conveyor. pulley, dive mechanism, movable die head, mesh pushing mechanism, mesh pulling mechanism, and the like. As such, the means can continuously supply the mesh 324 to the die opening 321 so that the extrudate 326 is extruded around and encapsulates the mesh 324. The encapsulated mesh 328 is represented by the lines within the extrudate 326. Additionally, the mesh 324 can be supplied at a rate substantially equivalent with the rate of extrusion so that the reinforced extrudate is evenly formed.

With reference now to Figure 3C, another embodiment of a co-extrusion system 340 is depicted. The co-extrusion system 340 includes a die head 342 with a die opening 348. The die head 342 and die opening 348 are configured so that a supplemental supporting element 344 *(i.e.,* at least one rebar) can be passed through the die head 342 via a channel 346. The channel 346 allows the rebar 344 to be passed through the die opening 348 via a channel opening 350. When the rebar 344 passes through the channel opening 350 it is encapsulated with the extrudate 352 so as to form encapsulated rebar 354.

With reference now to Figure 3D, another embodiment of a co-extrusion system 360 is depicted. The co-extrusion system 360 includes a die head 362 with a die opening 363 and an open mold 364. The open mold 364 is configured to include an open cavity 366 defined by the mold body 368. In use, the open mold 364 receives the supplemental supporting element 370 such as a wire or fabric mesh, plurality of rebar or wires within the open cavity 366. This allows for the extrudate 374 to be extruded onto and around the mesh 370 so as to form encapsulated mesh 376, as shown by the dashed lines within the extrudate 374.

While the open mold 364 can be used to define the cross-sectional shape of the extrudate 374, it-does not necessarily do so. This is because the co-extrusion system 360 can be configured such that the open mold 365 merely supports the mesh 376, and passes the mesh 370 past the die opening 363. Thus, the extrudate 374 can be self-supporting and encapsulate the mesh 370 within the open mold 364 or on some other feature such as a conveyor system, pulley, drive mechanism, movable die head, rebar pushing mechanism, rebar pulling mechanism, and the like (not shown).

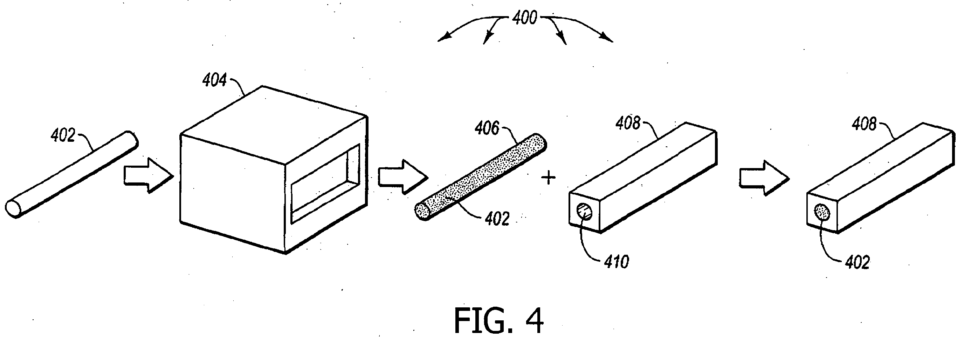

Figure 4 is a schematic diagram illustrating another embodiment for structurally reinforcing a cementitious building product with a rebar-like structure. As such, the reinforcing process 400 can use rebar 402 prepared from any strengthening material such as metal, glass, ceramic, plastic, and the like. The rebar 402 can then be processed through a processing apparatus 404 that applies a coating of epoxy 406 to the rebar 402. A cementitious building product 408 having continuous hole 410 formed therein, such as by the processes described in connection to Figure 1 B, can be obtained for receiving the epoxy 406 coated rebar 402. The epoxy 406 coated rebar 402 is then inserted into the hole 410. This can include driving, pressing, or otherwise forcefully pushing the epoxy 406 coated rebar 402 into the hole. Accordingly, the cementitious building product 408 having the rebar 402 can be significantly strengthened and structurally reinforced. Alternatively, the epoxy can be inserted into the hole 410 of the cementitious building product 408 before the rebar 402 is inserted therein.

In one embodiment, the green extrudate with or without a supplemental supporting element can be further processed by causing or allowing the hydraulic cement within the green extrudate to hydrate or otherwise cure as described above so as to form a solidified cementitious building product. As such, the cementitious building product can be prepared so as to be immediate form-stable after being extruded so as to permit the handling thereof without breakage. More preferably, the cementitious composition, or green extrudate can be form-stable within minutes, more preferably within 10 minutes, even more preferably within 5 minutes, and most preferably within 1 minute after being extruded. The most optimized and preferred composition and processing can result in a green extrudate that is form-stable upon extrusion. The use of a rheology-modifying agent can be used to yield extrudates that are immediately form-stable even in the absence of hydration of the hydraulic cement binder.

In order to achieve form-stability, the manufacturing system can include a dryer, heater or autoclave to cause the green extrudate to hydrate, set or otherwise cure as described above. The dryer or heater can be configured to generate enough heat as described above to drive off or evaporate the water from the extrudate so as to increase its rigidity and porosity or induce the onset of the rapid reaction period. On the other hand, an autoclave can provide pressurized steam to induce the onset of the rapid reaction period.

In one embodiment, the green extrudate can be induced to initiate the rapid reaction period as described herein in addition to including a set accelerator within the cementitious composition. As such, the green extrudate can be induced to initiate the rapid reaction period by altering the temperature of the extrudate or changing the pressure and/or relative humidity. Also, the rapid reaction period can be induced by configuring the set accelerator to initiate the reactions within a predetermined period of time after being extruded.

In one embodiment, the preparation of a cementitious composite or building product can include substantially hydrating or otherwise curing the green extrudate into the cementitious building product within a shortened period, or a faster reaction rate, compared to conventional concretes or other hydraulically settable materials. As a result, the cementitious building product can be substantially cured or hardened, depending on the type of binder that is used, within about 48 hours, more preferably within about 24 hours, even more preferably within 12 hours, and most preferably within 6 hours. Thus, the manufacturing system and process can be configured in order to obtain fast cure rates so that the cementitious building product can be further processed or finished.

Moreover, with the higher curing temperatures as described above, a faster curing process can be achieved. Particularly, as noted above, the hydrating, setting, or otherwise curing can be conducted at temperatures greater than 65°C and less than 99°C, more preferably greater than 70°C, and even more preferably greater than 80°C. With these higher temperatures, the cementitious composites (i.e., cementitious building products) can be formed, having at least about 100% of their strength, within 48 hours, more preferably 40 hours, even more preferably 32 hours, and even more preferably 24 hours.

Conventionally, it was not possible to hydrate and/or cure at the above temperatures as higher temperatures are known to potentially delay formation of ettringites. This phenomena cause stress over time within the cementitious building product, expanding the product until cracking occurs. Accordingly, previous cementitious building products were manufactured using lower curing temperatures.

In the present disclosure, however, the specific compositions, as described above, provide for a higher porosity which controls the cracking effects of ettringite formation.

Additionally, it is known that secondary ettringites occur in the presence of water. One additional advantage of the methods of the present disclosure, is that the products prepare have less moisture, further preventing the formation of ettringites over time. Specifically, the curing temperatures used in the methods of the present disclosure allow for products with less than about 10% water.

Another advantage of using the higher curing temperatures is that it has been found that commonly used retarders, such as methocel and the like, and rheology modifies as described above precipitate out of solution at temperatures above about 70°C, allowing for a faster hydration, setting, and curing rate of the hydraulic cement within the extrudate. This provides a cementitious composite having a majority of its strength in a shorter period of time.

Additionally, the higher curing temperatures have been found to produce building products that have a lower bulk density and higher flexural strength as described below. Particularly, the flexural strength can be increased by at least about 50%, providing for a stronger, more durable product.

In one embodiment, a curing or cured cementitious composition can be further processed or finished. Such processing can include sawing, sanding, cutting, drilling, and/or shaping the cementitious composition into a desired shape, wherein the composition lends to such shaping. Accordingly, when a cementitious building product is sawed, the fibers and rheology-modifier can contribute to the straight cut-lines that can be formed without cracking or chipping the cut surface or internal aspects of the material. This enables the cementitious building product to be a wood substitute because a two-by-four-shaped product can be purchased by a consumer and cut with standard equipment into the desired shapes and lengths.

In one embodiment, the form-stable green extrudate can be processed through a system that modifies the external surface of the product. One example of such a modification is to pass the green extrudate through a calender or series of rollers that can impart a wood-like appearance. As such, the cementitious building product can be a wood substitute having the aesthetic appearance and texture of wood. Also, certain colorants, dyes, and/or pigments can be applied to the surface or dispersed within the cementitious building product so as to achieve the color of various types of woods.

The green extruded building products can also be reshaped while in a green state to yield, for example, curved boards or other building products having a desired radius. This is a significant advantage over traditional wood products, which are difficult to curve and/or which must be milled to have a curved profile. In one embodiment, the cementitious building product can be sanded and/or buffed in a manner that exposes the fibers at the surface. Due to the high percentage of fiber in the product, a large number of fibers can be exposed at the surface. This can provide for interesting and creative textures that can increase the aesthetic qualities of the product. For example, the cementitious building product can be sanded and buffed so that it has a suede or fabric-like appearance and texture.

BUILDING PRODUCTS

The present disclosure provides the ability to manufacture cementitious building products having virtually any desired size and shape, whether extruded in the desired shape or later cut, milled or otherwise formed into the desired size and shape. Examples include trim board, two-by-fours, other sizes of lumber, paneling, imitation plywood, imitation fiber board, doors, shingles, moldings, table tops, table legs, window frames, door casing, roofing tiles, wall board, kick plates, beams, I-beams, floor joists, and the like. Accordingly, the cerrientitious building product can be load bearing (*e.g.*, two-by-fours) or non-load bearing (*e.g.*, trim board). Thus, the cementitious building product can be used as a wood substitute for almost any building application.

The cured cementitious composite can be configured to have various properties in order to function as a lumber substitute. An example of a cured cementitious composite that can function as a lumber substitute can have any of the following properties: capable of receiving nails by hammer and/or ballistics; capable of retaining or holding the nails, especially when being connected to another object; capable of receiving screws by screwdriver or mechanical screwing device; capable of retaining or holding the screws, especially when being connected to another object; being similar in weight to a lumber product, but can be somewhat heavier; strong enough not to fracture when dropped; strong enough not to significantly deflect at ends or fracture when held or supported at the middle; and/or capable of being sawed or cut with a hand saw or other saw configured for cutting wood.

In one embodiment, the green extrudate or cementitious composite can be prepared into a building product as described above. As such, the specific gravity of the cured composite inclusive of pores or cellular formations can be greater than about 0.4 or range from about 0.4 to about 0.85, more preferably from about 0.5 to about 0.75, and most preferably about 0.6 to about 0.75.

One embodiment of the cured composite can be characterized by having a flexural strength greater than about 1500 psi (10.3 MPa), more preferably greater than about 1750 psi (12.1 MPa), more preferably greater than about 2,000 psi (13.8 MPa), even more preferably greater than about 3,000 psi (20.7 MPa), and even more preferably greater than about 4,000 psi (27.6 MPa). For example, in one embodiment, the cured composite can have a flexural strength of from about 1500 psi (10.3 MPa) to about 5000 psi (34.5 MPa).

As noted above, the higher temperature curing processes can allow for a cured cementitious composite with a higher flexural stiffness. For example, in one embodiment, the cured composite can have a flexural stiffness from about 160,000 psi (1.1 gigaPa) to about 850,000 psi (5.9 gigaPa), preferably from about 200,000 psi (1.4 gigaPa) to about 800,000 psi (5.5 gigaPa), more preferably from about 3,000 psi (20.7 MPa) to about 700,000 psi (4.8 gigaPa), and most preferably from about 400,000 psi (2.8 gigaPa) to about 600,000 psi (4.1 gigaPA).

Additionally, in one embodiment, the cured composite can have a flexural modulus from about 200,000 psi (1.4 gigaPa) to about 5,000,000 psi (34.5 gigaPa), more preferably from about 300,000 psi (2.1 gigaPa) to about 3,000,000 psi (20.7 gigaPa), and most preferably from about 500,000 psi (3.4 gigaPa) to about 2,000,000 psi (13.8 gigaPa).

In one embodiment, the cured composite can have an elastic energy absorption from about 5 lbf-in (0.6 N.m) to about 50 lbf-in (5.6 N.m), preferably from about 10 lbf-in (1.1 N.m) to about 30 lbf-in (3.4 N.m), more preferably from about 12 lbf-in (1.4 N.m) to about 25 lbf-in (2.8 N.m), and most preferably from about 15 lbf-in (1.7 N.m) to about 20 lbf-in (2.3 N.m).

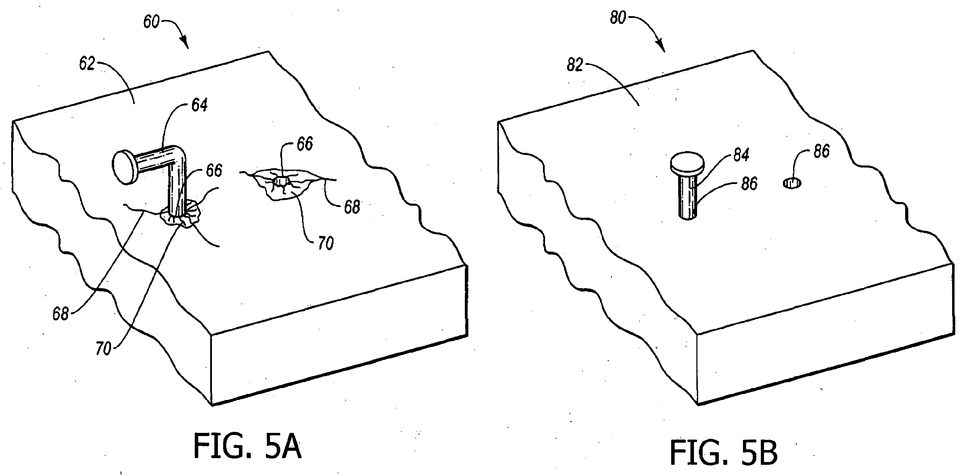

Additionally, the cementitious building product can be distinguished from prior concrete building products. Figure 5A depicts a representation of the problems that may arise from inserting (e.g., hammering, driving, or ballistic force) a fastening rod 64 (e.g., nail or screw) into the surface 62 of such a prior concrete building product 60, wherein the fastening rod 64 forms the hole 66 during insertion. Similar to ordinary concretes that are used in a variety of applications ranging from driveways to foundations, when the concrete 60 has a fastening rod 64 inserted therein, the structure of the surface 62 is damaged. As depicted, the concrete 60 and/or surface 62 are prone to forming cracks 68 and divots 70 from chipping around the hole 66.

Since the concrete 60 is damaged around the hole 66, the surface of the hole 66 can appear to have an irregular and fractured shape formed by substantial crack, divots, and/or chips. Additionally, the force required to insert a nail fastening rod 64 into concrete with a hammer from repeatedly striking the head of the nail 64 often damages or bends the nail 64 so that it is essentially useless. Additionally, when the fastening rod 64 is a screw, the screwing action can bore a hole 66 in the surface that is riddled with cracks and chips. Thus, prior concrete building products 60 have not been suitable wood substitutes with respect to being capable of receiving a fastening rod 64, and have resembled and behaved similar to ordinary concrete by cracking and chipping during such an insertion.

Referring now to Figure 5B, a representation of a cementitious building product 80 being used as a wood substitute in accordance with the present disclosure is depicted. Accordingly, the results of inserting a fastening rod 84 (e.g., nail or screw) into the surface 82 of the cementitious building product 80 are more favorable compared to the ordinary concrete of Figure 5A. More specifically, when a fastening rod 84 is inserted into the surface 82, the resulting hole 86 formed by the fastening rod 84 can be substantially round in shape. While there may be minor chipping or cracking as commonly occurs during such insertions into wood, the hole 86 is much more round and less damaged compared to the results of ordinary concrete. Since the cementitious building product 80 is configured as a wood substitute, a nail fastening rod 84 can be hammered therein by repeatedly striking the nail head without damaging or bending the nail 84.

In any event, the cementitious building products described herein can be used as wood substitute, and can even have a fastening rod inserted therein. As such, the inventive cementitious building products can be used to connect multiple pieced-together components or be used for other applications typical for a nail or screw.

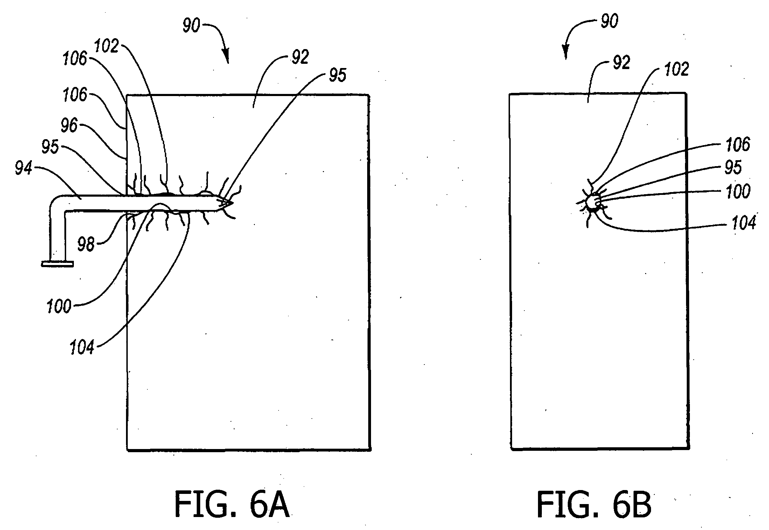

Furthermore, Figures 6A and 6B depict another representation 90 of the common results that occur when a fastening rod 94 *(e.g.,* nail or screw) is inserted into a prior or ordinary concrete building product 92. When the fastening rod 94 is inserted into the surface 96 of the concrete 92, a hole 95 formed by the insertion is fractured and jagged as shown in Figures 6A and 6B. Accordingly, in Figure 6A the representation 90 depicts a longitudinal cut-away view of the resulting damage to the ordinary concrete 92, and in Figure 6B the representation 90 depicts a mid-level cross-sectional view of the resulting damaged hole 95.

As shown, the fastening rod 94 causes not only the surface 96 to crack or form divots 98, but the internal surface 100 of the entire length of the hole 95 is similarly damaged. More particularly, inserting the fastening rod 94 causes the internal surface 100 to be riddled with cracks 102, crushed concrete 104, and chipped concrete 106. Even though it is possible to insert a fastening rod 94 into concrete, it often requires some sort of ballistic or explosive charge instead of a hammering or screwing because ordinary hammering often results in bending a nail fastening rod 94 and screwing significantly damages the internal surface 100.

Additionally, a fastening rod 94 that has been inserted into ordinary concrete 92 can be easily extracted therefrom, often without the use of a tool or device as described above. Briefly, this is because the damage to the inner surface 100 decreases the compressive forces applied against the fastening rod 94 that are needed to hold it in place. As such, ordinary concrete 92 has a small or low pullout resistance, and a nail or screw 94 can be easily extracted therefrom. This does not allow the ordinary concrete 92 to be used as wood substitutes, and two such pieces cannot be properly nailed together without easily being pulled apart.

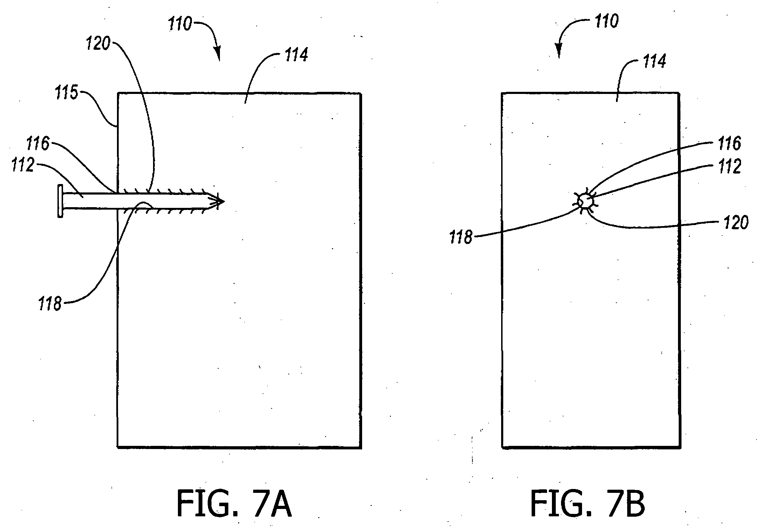

Furthermore, Figures 7A and 7B depict a representation 110 of common results for a fastening rod 112 being inserted into a fiber-reinforced cementitious building product 114 in accordance with the present disclosure. In contrast to the representation in Figures 6A and 6B, when the fastening rod 112 is inserted into the surface 115 of the inventive building product 114, a hole 116 formed by the insertion is not damaged or substantially fractured, which is also shown in Figure 5B. Accordingly, Figure 7A depicts a longitudinal cut-away view of the resulting hole 116, and Figure 7B depicts a mid-level cross-sectional view of the resulting hole 116.

As shown, the fastening rod 112 does not cause any substantial damage to the surface 115, or the internal surface 118 of the entire length of the hole 116. More particularly, inserting the fastening rod 112 can cause fibers 120 at the internal surface 118 to become exposed and deformed or pushed aside by the fastening rod 112. As described, these fibers 120 are deformed or pushed aside to allow the fastening rod 112 to pass by, but then exert a gripping force against the fastening rod 112 after the insertion. Additionally, the rheology-modifier can provide for the building product to deform by the nail when it is being inserted, and then apply a gripping force against the nail after being inserted.

Additionally, a hole 116 formed by a nail fastening rod 112 is not damaged, and can provide sufficient compressive forces against the nail to resist the extraction therefrom. This is because the nail 112 does not damage the wall of the hole 116 during the insertion by the fibers and other materials deforming during the formation of the hole 116. Furthermore, when the fastening rod 112 is a screw, the wall of the hole 116 can have ridges and grooves that interlock with the teeth and grooves on the screw. Moreover, a substantial amount of composite material within the grooves of the screw 112 can be attached to the wall to aid in providing an increased pullout resistance. Thus, the wall of the hole 116 is sufficiently compressive so as to require the aid of a lever, screwdriver, or other extraction device to remove the nail or screw.

The cementitious building products can be used as a wood substitute for applications where multiple building products are nailed, screwed, or bolted together. It is thought, without being bound thereto, that the combination of a high weight percent and/or volume percent of fibers, as described above, provides for favorable interactions with the nails, screws, and/or bolts. This is because the high amount of fibers simulates the properties of wood. More particularly, each individual fiber can deform when first being acted upon by a nail or screw, and then compress against the nail or screw to provide a gripping force thereto. This allows for a nail or screw to be inserted within the cementitious building product without causing substantial chipping or cracking.

Additionally, the use of a high concentration of rlieology-modifier can also aid in providing this furictionality. As with the fibers, the rheology-modifier provides a characteristic to the cementitious building product that at least partially allows for being deformed without substantial cracking or chipping. In part, the rheology-modifier can impart a plastic-like characteristic that holds the materials together around a site that is being stressed, such as at the point where a nail or screw is being inserted. As such, the nail or screw is able to be inserted into the ceinentitious building product, and the rheology-modifier allows for the requisite deformation without substantial chipping or cracking.

For example, the high concentration of fibers, or other filler materials can impart significant pullout resistance to the cementitious building product. The pullout resistance for a 10d (76 m) nail (e.g., nail characterized by 9 gauge or 0.128 inch (3.25 mm) in diameter and 3 inches (76 mm) long) imbedded one inch in a cementitious composite can range from about 30 lbf/in (3.4 N.m) to about 105 lbf/in (11.9 N.m), more preferably about 40 lbf/in (4.5 N.m) to about 95 lbf/in (10.7 N.m), and most preferably about 50 lbf/in (5.6 N.m) to about 85 lbf/in (9.6 N.m). The pullout resistance for a more porous cementitious composite can range from about 25 lbf/in (2.8 N.m) to about 90 lbf/in (10.2 N.m), more preferably about 30 lbf/in (3.4 N.m) to about 70 lbf/in (7.9 N.m), and most preferably about 40 lbf/in (4.5 N.m) to about 60 lbf/in (6.8 N.m). The pullout resistance for a harder cementitious composite can range from about 15 lbf/in (1.7 N.m) to about 60 lbf/in(6.8 N.m), more preferably from about 18 lbf/in (2.0 N.m) to about 50 lbf/in (5.6 N.m), and most preferably about 20 lbf/in (2.3 N.m) to about 50 lbf/in (5.6 N.m). However, it should be understood that the pullout resistance for a product at a given density can change by altering the amount of fiber, porosity, filler, type of nail, and the like.

Similarly, the pullout resistance for a screw imbedded one inch (25.4 mm) in a cementitious composite can range from about 200 lbf/in (22.6 N.m) to about 1,000 lbf/in (113.0 N.m), more preferably about 300 lbf/in (33.9 N.m) to about 950 lbf/in (107.4 N.m), and most preferably about 400 lbf/in (45.2 N.m) to about 900 lbf/in (101.7 N.m). However, it should be understood that the pullout resistance for a product at a given density can change by altering the amount of fiber, porosity, filler, type of nail, and the like.

Additionally, the cementitious composites primarily comprise inorganic materials they are less prone to rot when kept in a moist environment compared to wood. Even though organic fibers may have a tendency to degrade under certain conditions, the generally high alkalinity of hydraulic cement will inhibit spoilage and rotting in most circumstances.

**EXAMPLES OF EMBODIMENTS OF THE DISCLOSURE**

**Example 1**

Various extrudable compositions having different component concentrations were prepared in accordance with the present disclosure. The components of the compositions were mixed according to the normal mixing procedures described above and the references incorporated herein. The extrudable compositions were formulated as illustrated in Table 1.

**Table 1**

| Component | Composition 1 | Composition 2 | Composition 3 |
|---|---|---|---|
| Materials (Wet) (Kg) | 44.80 | 45.16 | 48.30 |
| Water (Kg) | 20.00 | 20.00 | 2350 |
| Cement (Kg) | 16.00 | 16.00 | 16.00 |
| PVA Fiber (8mm) | 0.60 | 0.60 | 0.60 |
| Hardwood Fiber | 7.00 | 7.00 | 0.00 |
| Newspaper | 0.00 | 0.00 | 7.00 |
| Methocel (240 HPMC) | 1.20 | 1.20 | 1.20 |
| Expancel | 0.00 | 0.36 | 0.00 |

Following mixing, the compositions were extruded through a die head having a rectangular opening of about 1 inch (25.4 mm) by about 4 inches (101.6 mm). Three samples of each of the three compositions were used for preparing composite building products in the shape of a one-by-four. The sample products were cured in plastic at ambient conditions for about 7 days. The plastic was then removed and the samples were placed in a steam chamber for 8 days. The samples were then placed in a dry oven for 7 days until they reached weight equilibrium. The samples were finally characterized by measuring density and testing flexural strength, flexural modulus, and by their ability to be nailed and to hold a screw. Nails and screws can be introduced into the samples using conventional tools used to work with wood products of similar dimension. The results (average of samples for each composition) are shown in Table 2.

**Table 2**

| | Composition 1 | Composition 2 | Composition 3 |
|---|---|---|---|
| Density at time of testing (g/cc) | 0.89 | 0.46 | 0.86 |
| Flexural Strength (psi) | 2.501.81 (17.25 MPa) | 469.57 (3.24 MPa) | 2,421.21 (16.69 MPa) |
| Flexural Modulus (psi) | 576,842.00 (3.98 gigaPa) | 94,862.50 (0.65 gigaPa) | 521,910.00 (3.60 gigaPa) |
| Nail Hold (lbf/in) | 315.42 (35.6 N.m) | 35.42 (4.0 N.m) | 243.61 (27.5 N.m) |
| Screw Hold (lbf/in) | 348.42 (39.4 N.m) | 86.12 (9.7 N.m) | 376.57 (42.6 N.m) |

As shown in Table 2, by adding Expancel (microsphere filler) to the extrudable composition of composition 2, the bulk density was drastically reduced as compared to compositions 1 and 3, however, flexural strength also dropped. Furthermore, as shown by comparing composition 1 and 3, by replacing hardwood for newsprint, the bulk density was slightly lowered, however, none of the other properties were affected. This allows for the production of a composition having high strength and lower density, while being safer for the environment.

**Example 2**

Various extrudable compositions having varying methocel to cement ratios were prepared in accordance with the present disclosure. All compositions were mixed according to the normal mixing procedures described above and in the references in Table 3.

**Table 3**

| Component | Composition 4 | Composition 5 | Composition 6 | Composition 7 |
|---|---|---|---|---|
| Materials (Wet) Kg) | 48.30 | 44.80 | 45.40 | 56.40 |
| Water (Kg) | 23.50 | 20.00 | 21.00 | 24.00 |
| Cement (Kg) | 16.00 | 16.00 | 21.00 | 24.00 |
| PVA Fiber (8mm) | 0.60 | 0.60 | 0.60 | 0.60 |
| HW | 0.00 | 7.00 | 7.00 | 7.00 |
| Newspaper | 7.00 | 0.00 | 0.00 | 0.00 |
| Methocel (240 HPMC) | 1.20 | 1.20 | 0.80 | 0.80 |
| SW = softwood and HW = hardwood | | | | |

Following mixing, the compositions were extruded through a die head having a rectangular opening of about 1 inches (25.4 mm) by about 4 inches (101.6 mm). Eight samples for each composition were used to prepare composite building products in the shape of a one-by-four product. The sample products were cured in plastic at ambient conditions for about 7 days. The plastic was then removed and the samples were placed in a steam chamber for 8 days. The samples were then placed in a dry over for 7 days until they reached weight equilibrium. Further, of the eight samples per composition, 3 samples remained uncoated for dry flexural strength and nail/screw hold testing, 1 sample was uncoated for wet flexural strength, nail/screw hold testing and water absorption, 2 samples were coated with Protectosil® BHN Plus (4 brush coats) (available from Evonik Degussa Corporation, Parsippany, NJ) for wet flexural strength, nail/screw hold, and water absorption, and 2 samples were coated with Xylexin XL (2 brush coats) (available from Shield Master, Provo, UT) for wet flexural strength, nail/screw hold, and water absorption.

The samples were finally characterized by measuring density and testing dry and wet flexural strength, flexural modulus, and by their ability to be nailed and to hold a screw. Wet flexural strength was tested by immersing the samples into water for about 48 hours. Nails and screws can be introduced into the samples using conventional tools used to work with wood products of similar dimension. The results (average of samples for each composition) are shown in Tables 4 and 5.

**Table 4**

| | Composition 4 | Composition 5 | Composition 6 | Composition 7 |
|---|---|---|---|---|
| Density at time of testing (g/cc) | 0.87 | 0.95 | 0.91 | 1.01 |
| Dry Flexural Strength (psi) | 2,754.11 (18.99 MPa) | 2,538.00 (17.50 MPa) | 2,063.13 (14.22 MPa) | 2,303.86 (15.88 MPa) |
| Flexural Modulus (psi) | 560,308.00 (3.86 gigaPa) | 617,844.00 (4.26 gigaPa) | 543,103.00 (3.74 gigaPa) | 651,748.00 (4.49 gigaPa) |
| Nail Hold (lbf/in) | 253.53 (28.6 N.m) | 295.98 (33.4 N.m) | 269.03 (30.4 N.m) | 376.79 (42.8 N.m) |
| Screw Hold (lbf/in) | 415.03 (46.9 N.m) | 427.51 (48.3 N.m) | 345.81 (39.1 N.m) | 463.89 (52.4 N.m) |

**Table 5**

| Composition | | Wet Flexural Strength (psi) (MPa) | Water Absorption (%) |
|---|---|---|---|
| Composition 4 | Uncoated Sample | 1165 (8.03) | 24.42 |
| | Coated with BHN Plus | 1589 (10.96) | 10.6 |
| | Coated with Xylexin XL | 2668 (18.40) | 6.96 |

(continued)

| Composition | | Wet Flexural Strength (psi) (MPa) | Water Absorption (%) |
|---|---|---|---|
| Composition 5 | Uncoated Sample | 992 (6.84) | |
| | Coated with BHN Plus | 1359 (9.37) | |
| | Coated with Xylexin XL | 2260 (15.58) | |
| Composition 6 | Uncoated Sample | 871 (6.01) | |
| | Coated with BHN Plus | 1136 (7.83) | |
| | Coated with Xylexin XL | 1252 (8.63) | |
| Composition 7 | Uncoated Sample | 1149 (7.92) | |
| | Coated with BHN Plus | 1440 (9.93) | |
| | Coated with Xylexin XL | 2037 (14.04) | |

As shown in Table 4, the ratio of cement to methocel did not affect the flexural strength of the cured cementitious product. The ratio of cement to methocel, however did affect the nail hold. Specifically, composition 7, which had the highest ratio of cement to methocel (43:1), had significantly higher nail hold ability as compared to the other compositions.

Further, as shown in Table 5, uncoated samples lost a significant amount of strength upon being immersed in water. The coated samples, however, did not absorb as much water and thus better maintained their strength, with the samples coated with Xylexin XL maintaining strength better than those coated with BHN Plus.

## Example 3

Two cementitious compositions were prepared and processed into a cementitious building product, and the building product was tested to determine physical properties.

Briefly, two cementitious building products (16' (4.88 m) long 1 x4 boards) were prepared by mixing and extruding composition 7 as described in Table 3. One board was produced including pins/rods within the extruded composition and the second board was produced without pins. The products were covered in plastic and stored at room temperature for about 28 days to set. The set extrudate was then placed in plastic for 7 additional days, the plastic was removed and the boards were then steam cured for about 5 days. The cured boards were then placed in a dry chamber for about 3 days and were planed and cut to be sent out for flexural strength and screw/nail hold testing. Specifically, a 6" segment was cut from the end of each board for density and moisture content testing. Testing showed that the boards each had a bulk density of approximately 0.99 g/cc and a flexural strength of about 2700 psi (18.61 MPa). The average screw pull was about 450 lbf/in (50.9 N.m) and the average nail pull was 350 lbf/in (39.6 N.m).

The remaining boards (~15.5' (4.69m)) were then tested for deflection over length until catastrophic failure. Specifically, the board was considered passing if 10' (3.05 m) could be placed over the edge of a table and still support its own weight. The board including the pins was able to be extended 13' (3.96 m) off of the table and had a deflection of about 54" (1.37 m) where it touched the ground. The board without pins broke once about 12' (3.66 m) extended from the table and had a deflection of about 34" (0.86 m).

## Example 4

In this Example, the two boards of Example 3 were again prepared using the same composition 7 with the exception of not including PVA fibers in the composition. Again, the boards were tested for density and moisture content, as well as for deflection over length until catastrophic failure as described in Example 3.

The testing showed that fibers do impact the flexural strength as well as screw and nail hold of a cementitious composite product. Specifically, the results (averaged) of the two boards (one including pins and one without) showed a decrease in flexural strength to about 2100 psi (14.48 MPa) and an average screw hold of about 395 lbf/in (44.6 N.m) and an average nail hold of about 285 lbf/in (22.2 N.m). The boards further had an average deflection of about 217/8" (0.56 m) at a 10' (3.01 m) extension before breaking at 11' (3.35 m).

## Claims

1. A method of manufacturing a cementitious composite product having properties suitable for use as a substitute for wood lumber, comprising:

   mixing together water, fibers and a rheology-modifying agent to form a fibrous mixture in which the fibers are substantially homogeneously dispersed, the rheology-modifying agent is selected from the group consisting of is polysaccharides, proteins, celluloses, starches, methylhydroxyethylcellulose, hydroxymethylethylcellulose, carboxymethylcellulose, methylcellulose, ethylcellulose, hydroxyethylcellulose, hydroxypropylcellulose, amylpectin, amulose, seagel, starch acetates, starch hydroxyethers, ionic starches, long chain alkylstarches, dextrins, amine starches, phosphate starches, dialdehyde starches, clay, and combinations thereof;
   adding hydraulic cement to the fibrous mixture to yield an extrudable cementitious composition having a plastic consistency and which includes the rheology-modifying agent at a concentration from 0.1 % to 10% by wet volume, and fibers at a concentration greater than 5% by wet volume;
   extruding the extrudable cementitious composition into a green intermediate extrudate having a predefined cross-sectional area, the green extrudate being form-stable upon extrusion and capable of retaining substantially the cross-sectional area so as to permit handling without breakage;
   heating the green extrudate to a temperature of from greater than 65°C to less than 99°C to allow curing of the hydraulic cement.

2. The method as set forth in Claim 1. wherein the green extrudate is heated to a temperature of greater than 70°C to less than 99°C to remove a portion of the water by evaporation and reduce the density of the extrudate.

3. The method as set forth in Claim 2, wherein the extrudable composition has a nominal water/cement ratio greater than 0.75 prior to heating and an actual water/cement ratio less than 0.5 after evaporation of the portion of water.

4. The method as set forth in Claim 1, wherein the green extrudate is heated to a temperature of greater than 80°C to less than 99°C to remove a portion of the water by evaporation and reduce the density of the extrudate.

5. The method as set forth in Claim 1, wherein the cementitious composition has at least 100% of its strength within 48 hours.

6. The method as set forth in Claim 1, wherein the cementitious composition has at least 100% of its strength within 40 hours.

7. The method as set forth in Claim 1, wherein the cementitious composition has at least 100% of its strength within 24 hours.

8. A cementitious composite product prepared by the method of Claim 1.

9. The cementitious composite product as set forth in Claim 8, wherein the extrudable cementitious composition comprises fibers at a concentration greater than 7% by wet volume.

## Patentansprüche

1. Verfahren zur Herstellung eines zementartigen Verbundproduktes mit Eigenschaften, die geeignet sind zur Verwendung als ein Ersatz für Bauholz umfassend:

   Zusammenmischen von Wasser, Fasern und einem Rheologiemodifizierungsmittel, um eine faserige Mischung zu bilden
   in welcher die Fasern im Wesentlichen homogen dispergiert sind, das Rheologiemodifizierungsmittel ausgewählt ist aus der Gruppe bestehend aus ist Polysacchariden, Proteinen, Zellulosen, Stärken, Methylhydroxyethylzellulose, Hydroxymethylethylzellulose, Carboxymethylzellulose, Methylzellulose, Ethylzellulose, Hydroxyethylzellulose, Hydroxypropylzellulose, Amylpektin, Amulose, Seagel, Stärkeacetaten, Stärkehydroxyethem, ionischen Stärken, langkettigen Alkylstärken, Dextrinen, Aminstärken, Phosphatstärken, Dialdehydstärken, Lehm und Kombinationen hiervon;

Hinzufügen von hydraulischem Zement zu der faserigen Mischung, um eine extrudierbare, zementartige Zusammensetzung zu erhalten mit einer plastischen Konsistenz und welche das Rheologiemodifizierungsmittel enthält in einer Konzentration von 0,1% bis 10% im Nassvolumen und Fasern in einer Konzentration größer als 5% im Nassvolumen;

Extrudieren der extrudierbaren zementartigen Zusammensetzung in ein grünes Zwischenextrudat mit einer vordefinierten Querschnittsfläche, wobei das grüne Extrudat formstabil nach der Extrusion und dazu geeignet ist, die Querschnittsfläche im Wesentlichen beizubehalten, um Handhabung ohne Brechen zu erlauben;

Aufheizung des grünen Extrudats auf eine Temperatur größer als 65°C bis weniger als 99°C, um Aushärten des hydraulischen Zements zu ermöglichen.

2. Verfahren nach Anspruch 1, wobei das grüne Extrudat aufgeheizt wird auf eine Temperatur größer als 70°C bis weniger als 99°C, um einen Teil des Wassers durch Verdampfung zu entfernen und die Dichte des Extrudats zu reduzieren.

3. Verfahren nach Anspruch 2, wobei die extrudierbare Zusammensetzung ein nominales Wasser/Zement-Verhältnis hat größer als 0,75 vor der Aufheizung und ein effektives Wasser/Zement-Verhältnis kleiner als 0,5 nach Verdampfung von einem Teil vom Wasser.

4. Verfahren nach Anspruch 1, wobei das grüne Extrudat aufgeheizt wird auf eine Temperatur größer als 80°C bis weniger als 99°C, um einen Teil des Wassers durch Verdampfung zu entfernen und die Dichte des Extrudats zu reduzieren.

5. Verfahren nach Anspruch 1, wobei die zementartige Zusammensetzung mindestens 100% seiner Festigkeit innerhalb von 48 Stunden aufweist.

6. Verfahren nach Anspruch 1, wobei die zementartige Zusammensetzung mindestens 100% seiner Festigkeit innerhalb von 40 Stunden aufweist.

7. Verfahren nach Anspruch 1, wobei die zementartige Zusammensetzung mindestens 100% seiner Festigkeit innerhalb von 24 Stunden aufweist.

8. Zementartiges Verbundprodukt hergestellt mit dem Verfahren nach Anspruch 1.

9. Zementartiges Verbundprodukt nach Anspruch 8, wobei die extrudierbare zementartige Zusammensetzung Fasern in einer Konzentration größer als 7% im Nassvolumen enthält.

**Revendications**

1. Procédé de fabrication d'un produit composite cimentaire ayant des propriétés adaptées à une utilisation comme substitut de bois d'oeuvre, comprenant :

le mélange d'eau, de fibres et d'un agent modificateur de rhéologie pour former un mélange fibreux dans lequel les fibres sont dispersées de manière sensiblement homogène, l'agent modificateur de rhéologie étant choisi dans le groupe constitué de polysaccharides, protéines, celluloses, amidons, méthylhydroxyéthylcellulose, hydroxyméthyléthylcellulose, carboxyméthylcellulose, méthylcellulose, éthylcellulose, hydroxyéthylcellulose, hydroxypropylcellulose, amylopectine, amylose, gel marin, acétates d'amidon, hydroxyéthers d'amidon, amidons ioniques, amidons d'alkyle à longue chaîne, dextrines, amidons d'amine, amidons de phosphate, amidons de dialdéhyde, argile et combinaisons de ceux-ci ;

l'ajout de ciment hydraulique au mélange fibreux pour produire une composition cimentaire extrudable ayant une consistance plastique et qui comprend l'agent modificateur de rhéologie à une concentration de 0,1 % à 10 % en volume humide, et des fibres à une concentration supérieure à 5 % en volume humide ;

l'extrusion de la composition cimentaire extrudable en un extrudat intermédiaire vert ayant une surface en coupe prédéfinie, l'extrudat vert étant de forme stable lors de l'extrusion et capable de conserver sensiblement la surface en coupe de sorte à permettre une manipulation sans cassure ;

le chauffage de l'extrudat vert à une température allant de plus de 65°C à moins de 99°C pour permettre le durcissement du ciment hydraulique.

**2.** Procédé selon la revendication 1, dans lequel l'extrudat vert est chauffé à une température allant de plus de 70°C à moins de 99°C pour éliminer une partie de l'eau par évaporation et réduire la densité de l'extrudat.

**3.** Procédé selon la revendication 2, dans lequel la composition extrudable a un rapport eau/ciment nominal supérieur à 0,75 avant chauffage et un rapport eau/ciment réel inférieur à 0,5 après évaporation de la partie d'eau.

**4.** Procédé selon la revendication 1, dans lequel l'extrudat vert est chauffé à une température allant de plus de 80°C à moins de 99°C pour éliminer une partie de l'eau par évaporation et réduire la densité de l'extrudat.

**5.** Procédé selon la revendication 1, dans lequel la composition cimentaire possède au moins 100 % de sa résistance en 48 heures.

**6.** Procédé selon la revendication 1, dans lequel la composition cimentaire possède au moins 100 % de sa résistance en 40 heures.

**7.** Procédé selon la revendication 1, dans lequel la composition cimentaire possède au moins 100 % de sa résistance en 24 heures.

**8.** Produit composite cimentaire préparé par le procédé de la revendication 1.

**9.** Produit composite cimentaire selon la revendication 8, dans lequel la composition cimentaire extrudable comprend des fibres à une concentration supérieure à 7 % en volume humide.

FIG. 1C

FIG. 1A

FIG. 1B

FIG. 2

FIG. 3A

FIG. 3B

FIG. 3C

FIG. 3D

EP 2 504 295 B1

FIG. 4

EP 2 504 295 B1

FIG. 5B

FIG. 5A

FIG. 6B

FIG. 6A

FIG. 7A

FIG. 7B

EP 2 504 295 B1

FIG. 8

FIG. 9

FIG. 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5508072 A
- US 5549859 A
- US 5580409 A

- US 5631097 A
- US 5626954 A
- US 627563 P